# EUROPEAN PATENT SPECIFICATION

(11) **EP 4 040 245 B1**
(45) Date of publication and mention of the grant of the patent: **10.09.2025**
(21) Application number: 21156056.0
(22) Date of filing: 09.02.2021
(51) Int. Cl.: H04L 41/0806, G05B 19/418

(54) **METHOD, COMPUTER-IMPLEMENTED-TOOL, CONTRAPTION AND CONFIGURATION ARRANGEMENT FOR CONFIGURING A DEVICE TO BE COMMISSIONED OF A SET OF DEVICES FOR COMMISSIONING WITH A TECHNICAL OR CYBER-PHYSICAL SYSTEM**
VERFAHREN, COMPUTERIMPLEMENTIERTES WERKZEUG, VORRICHTUNG UND KONFIGURATIONSANORDNUNG ZUR KONFIGURIERUNG EINER IN BETRIEB ZU NEHMENDEN VORRICHTUNG EINES VORRICHTUNGSSATZES ZUR INBETRIEBNAHME MIT EINEM TECHNISCHEN ODER CYBER-PHYSIKALISCHEN SYSTEM
PROCÉDÉ, OUTIL MIS EN UVRE PAR ORDINATEUR, ENGIN ET AGENCEMENT DE CONFIGURATION D'UN DISPOSITIF À METTRE EN SERVICE D'UN ENSEMBLE DE DISPOSITIFS DE MISE EN SERVICE À L'AIDE D'UN SYSTÈME TECHNIQUE OU CYBERPHYSIQUE

(43) Date of publication of application: 10.08.2022
(73) Proprietor: Siemens Aktiengesellschaft, 80333 München (DE)
(72) Inventor: Batsiukov, Kiryl, 81379 München (DE); Buschmann, Frank, 80336 München (DE); Oeh, Dominik, 96146 Altendorf (DE); Telschig, Kilian, 81543 München (DE); Weiss, Johannes, 96170 Lisberg (DE); Winhuysen, Jan, 80469 München (DE)
(74) Representative: Siemens Patent Attorneys

(56) References cited:
- EP-A1- 3 654 123
- US-A1- 2004 259 533
- US-A1- 2007 250 180
- US-A1- 2013 282 931
- KOZIOLEK HEIKO ET AL: "Self-Commissioning Industrial IoT-Systems in Process Automation: A Reference Architecture", 2018 IEEE INTERNATIONAL CONFERENCE ON SOFTWARE ARCHITECTURE (ICSA), IEEE, 30 April 2018 (2018-04-30), pages 196 - 19609, XP033376330, DOI: 10.1109/ICSA.2018.00029
- DIBOWSKI H ET AL: "Ontology-based Device Descriptions and triple store based device repository for automation devices", EMERGING TECHNOLOGIES AND FACTORY AUTOMATION (ETFA), 2010 IEEE CONFERENCE ON, IEEE, PISCATAWAY, NJ, USA, 13 September 2010 (2010-09-13), pages 1 - 9, XP031937201, ISBN: 978-1-4244-6848-5, DOI: 10.1109/ETFA.2010.5641257

## Description

The invention refers to a method for configuring a device to be commissioned of a set of devices for commissioning with a technical or cyber-physical system according to the preamble claim 1, a computer-implemented-tool for configuring a device to be commissioned of a set of devices for commissioning with a technical or cyber-physical system according to the preamble claim 7, and a contraption for configuring a device to be commissioned of a set of devices for commissioning with a technical or cyber-physical system according to the preamble claim 13 and a configuration arrangement for configuring a device to be commissioned of a set of devices for commissioning with a technical or cyber-physical system according to the preamble claim 14.

In various technical domains such as in the field of medicine, telecommunication and energy technology or furthermore in the area of industry automation with regard to an automated industrial factory or in the area of smart infrastructure with regard to a smart city or building a new device, e.g. a new hardware device, shall be integrated in a corresponding technical or cyber-physical system consisting in general or already of multiple configurable hardware devices. For the device to work properly, software packages for instance of an application software and configuration data for this integration must be deployed to that device in a process of commissioning. Typically, such configuration and software is device and role specific and is a subject for manual editing and deployment.

Thus and currently software and configuration deployment are manual activities. An engineer has to flash a suitable software onto the device using a laptop and a specialized engineering software. The software has to be downloaded from a special repository and be connected to the other devices in the system. As a final step the software has to be configured with parameters, so e.g. sensor inputs, actuator output, etc, from an engineering tool.

For doing so the engineer has to be deeply experienced with the technical or cyber-physical system and his attention is still required in inconsistent cases. These manual engineering activities remain error prone.

It is an objective of the invention to propose a method, computer-implemented-tool, a contraption and a configuration arrangement for configuring a device to be commissioned of a set of devices for commissioning with a technical or cyber-physical system, by which the device to be commissioned for its in-system-operation is commissioned under device-consistency-check conditions less error prone.

This objective is solved with regard to a method defined in the preamble of claim 1 by the features in the characterizing part of claim 1.

The objective is further solved with regard to a computer-implemented-tool defined in the preamble of claim 7 by the features in the characterizing part of claim 7.

Moreover the objective is solved with regard to a contraption defined in the preamble of claim 13 by the features in the characterizing part of claim 13.

Furthermore the objective is solved with regard to a configuration arrangement defined in the preamble of claim 14 by the features in the characterizing part of claim 14.

The main idea of the invention according to the claims 1, 7, 13 and 14 in order to configure a device to be commissioned of a set of devices for commissioning with a technical or cyber-physical system, which is registered with or installed into and registered with the system, is
- to automatically deploy software package data, in particular being downloaded from a software repository storing software packages, and configuration data) by (i) collecting commissioning-related, configuration-relevant information of the device from the system or the device to be commissioned, (ii) fetching engineering data for the set of devices from a development control system with access to device data usable for the configuration provided by a digital-system-device-twin and (**iii**) identifying the software package data and the configuration data out of the collected information and the fetched engineering data for the set of devices by determining stepwise, for each device of the set of devices, and based on a matching algorithm, whether the collected information matches each with the corresponding fetched engineering data, wherein the software package data and the configuration data are identified when a match is determined otherwise in the case of a mismatch and to still identify the software package data is used to determine a partially match, and
- to flash or upload the identified software package data and configuration data on the device to configure it for the commissioning with the system and its in-system-operation.

The basic idea of the proposed solution is a simplification and automation of the process for deploying the software package data and the configuration data by using a combination of different information and identification features of a device and its surroundings.

It is introduced - instead of manual activities - a new configuration process which relies on the collection (e.g. a detection) of the commissioning-related, configuration-relevant information of the device, e.g. location or network environment, and its combination with the engineering data from the development control system, which is for instance an engineering system, with the access to the device configurations data provided by the digital-system-device-twin for the set of devices. This process reduces human interaction to only configuration cases with inconsistent information. This procedure has the following advantages:
- Less time consuming because the needed information is detected by the system, enabling faster execution.
- Less error prone and more consistent than manual configuration.
- Only in inconsistent cases a skillful engineer is needed, therefore more capacity for other activities.
- Less costs in the overall configuration procedure.

With regard to the commissioning-related, configuration-relevant information of the device used in the process for deploying the software package data and the configuration data to determine the proper configuration, preferably according to the claims 2 and 8, at least one of the following features or information are used, wherein **a**) to **c**) are used each mandatorily while **d**) is used optionally:
**a**) a device type, a device model and a device capability,
**b**) a preconfigured or sensor-measured device location information,
**c**) a device connectivity information, e.g. MAC-address, used network interfaces or connected networks and gadgets,
**d**) a built-in-identifier of the device, e.g. serial number according to a manufacturing process.

The cited information collected either from the device itself or from the technical or cyber-physical system and can be acquired by means of "Simple Network Management Protocol"-open standard (*cf.* https://en.wikipedia.org/wiki/Simple Network Management Proto col) and "Discovery and Configuration Protocol"-open standard (*cf.* https://en.wikipedia.org/wiki/Discovery and Configuration Pro tocol ) and further industrial configuration protocols.

Further with regard to the engineering data used also in the process for deploying the software package data and the configuration data to determine the proper configuration, preferably according to the claims 3 and 9, at least one of the following features or information are used, wherein **e**) to **j**) are used each mandatorily and **k**) is used optionally:
**e**) a device type, a device model and a device capability,
**f**) a preconfigured or sensor-measured device location information,
**g**) a device connectivity information, e.g. MAC-address, used network interfaces or connected networks and gadgets,
**h**) a location of the device,
**i**) an ID of software package assigned to the device,
**j**) connections to the system or to other devices inside or outside the system and
**k**) a preconfigured identifier of the device corresponding to the built-in-identifier of **d**) (*cf. above*) and/or a "mobile APP"-created identification marker, e.g. a device's label is scanned and assigned to the digital-system-device-twin based on the device type, the serial number, the MAC-Address etc.

The cited data listed in **e**) to **j**) and fetched via the development control system having access to device data usable for the configuration provided by the digital-system-device-twin from the digital-system-device-twin is exported in form of "Automation Markup Language"-open standard files (*cf.* https://en.wikipedia.org/wiki/AutomationML), while the cited data according to **k**) is additionally created data during commissioning.

By the process for deploying the software package data and the configuration data to determine the proper configuration and after the registration of the device to be commissioned with and/or the installation of the device to be commissioned into the system, e.g. either proactively or by a device discovery service, the information of the device itself (*cf. **a***), ***b**), **c**), **d**) above*) and the engineering data (*cf. **e**) to **j***) *and*/*or **k**) above*)) are combined to identify the software package data and the configuration data being deployed out of suitable a digital twin of the digital-system-device-twin and a corresponding software package, which may consist of device software/firmware and/or the configuration parameters.

This software package data is automatically downloaded and flashed/deployed on the device by the deployment process. Afterwards the configuration parameters for the device to be commissioned are downloaded and an application software according to the software package data is configured appropriately to the configuration data. As a result, the overall deployment and configuration process can be done by less skilled and experienced commissioners.

To determine the right software package data of the software packages and the right configuration data, the matching algorithm of the deployment process takes all devices available in the development control system respectively the engineering system and stepwise excludes each that device of the set of devices that do not match with the device to be commissioned and thus to be configured. At the end, in case there is a single match, the configuration can be done automatically, otherwise a heuristic approach is applied and/or a resolution engineer gets involved (*cf. claims 5 and 11*).

For each step in the matching algorithm the following is true (*cf. claims 4 and 10*): If information is not available for the device or in the engineering data, the device is not excluded from the following steps [<1> to <5>]:
<1> From all the devices concerning the engineering data, consider only devices where device type and model match the data from the device which must be configured. Apply the heuristic approach as described below for partial matches.
<2> From the devices in step <1>, consider only devices which placement information matches in the engineering data. Apply the heuristic approach as described below for partial matches.
<3> From the devices in step <2>, consider only devices which connectivity information matches engineering data. Apply heuristics as described below for partial matches.
<4> If the identification marker was created with a mobile app, then from step <3> consider only device with the same marker. Otherwise, further consider all devices from step <3>.
<5> If the step <4> results in a single device, the software package data, which is associated with the device in the development control system respectively the engineering system, can be downloaded from the software repository and applied. Otherwise, further human actions are required as described below.

In practice there are cases when the technical or cyber-physical system is built partially different than engineered or the device information (*cf. **a**), **b**), **c**), **d**) above*) is incomplete. If the matching algorithm detects resulting inconsistencies between the features of the device to be commissioned and the described ones according to the engineering data, it first tries to find a good solution with the help of the heuristic approach (*cf. claims 6 and 12 according to the Table below*). This solution is then presented to a commissioner of the system for approval. If no good solution is found this is presented as an error to the engineer. In these inconsistent cases the approval and error handling does not have to be done by the commissioner on site, but by a properly skilled resolution engineer (*cf. claims 5 and 11*).

**Table: Possible inconsistencies and their heuristics are:**

| INCONSISTENCY | HEURISTIC |
|---|---|
| Wrong location | Take the device next to the location |
| Wrong device type | Take a device with better capabilities |
| Wrong connectivity in the system | Take a device with better connectivity |

If multiple devices need to be added (due to installation, registration and configuration) to the system, the configuration process starts with devices responsible for connectivity (such as routers, industrial switches and wireless network access points) as other new devices may be depending on them.

Moreover, advantageous further developments of the invention arise out of the following description of a preferred embodiment of the invention according to FIGURES 1 to 3. They show:
FIGURE 1 a computer-implemented-scenario for configuring a device to be commissioned of a set of devices for commissioning with a technical or cyber-physical system,
FIGURE 2 based on the scenario depicted in the FIGURE 1 what kind of information is included in the commissioning-related, configuration-relevant information and what kind of data is included in the engineering data so that the matching algorithm MAG is enabled to deploy automatically the software package data and the configuration data to configure the device,
FIGURE 3 a configuration arrangement for configuring the device according to the scenario depicted in the FIGURE 1.

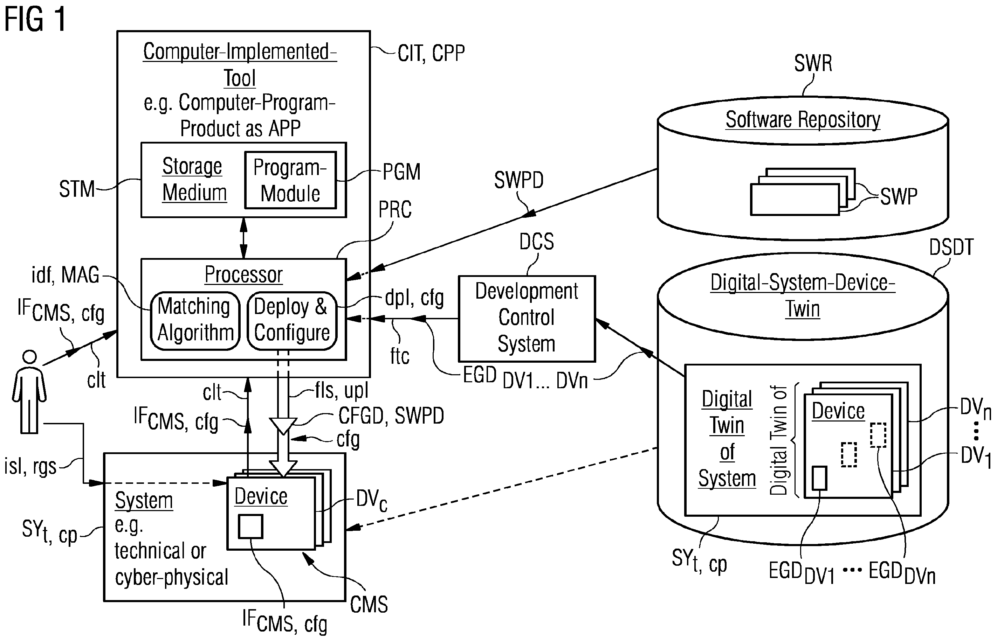

FIGURE 1 depicts a computer-implemented-scenario for configuring cfg a device DV_{c} to be commissioned of a set of devices DV₁...DVₙ for commissioning CMS with a technical or cyber-physical system SY_{t,cp}. The participants of the scenario are a computer-implemented-tool CIT, the technical or cyber-physical system SY_{t,cp}, a development control system DCS, a software repository SWR for storing software packages SWP and a digital-system-device-twin DSDT including each a digital twin of the system SY_{t,cp} and the set of DV₁...DVₙ, wherein the cited participants form a functional unit such that the device DV_{c} to be commissioned of the set of devices DV₁...DVₙ is configured cfg for commissioning CMS with the technical or cyber-physical system SY_{t,cp} and its in-system-operation.

To commission the device DV_{c} with the technical or cyber-physical system SY_{t,cp} the device DV_{c} firstly is either registered rgs with the system SY_{t,cp} or installed isl into the system SY_{t,cp} and registered rgs with the system SY_{t,cp}. While the installation is done manually by a user of the device and the system or by a commissioner, the registration is done by one the user and the commissioner either proactively at the device or by a device discovery service.

Further to commission the device DV_{c} software package data SWPD and configuration data CFGD to configure the device DV_{c} are used, which has to be deployed. This deployment is done automatically and is carried out by the computer-implemented-tool CIT in a way of orchestrating measures within the described functional unit for the deployment.

The computer-implemented-tool CIT is a computer-program-product CPP which is preferably designed as an application software, called as App, that allows, when it is implemented, to perform special tasks.

To this end the computer-implemented-tool CIT respectively the computer-program-product CPP comprises a non-transitory, processor-readable storage medium STM, in which processor-readable program-instructions of a program module PGM are stored. This program module PGM is used for configuring cfg the device DV_{c} and in this context for the deployment. Moreover the computer-implemented-tool CIT respectively the computer-program-product CPP comprises a processor PRC connected with the storage medium STM executing the processor-readable program-instructions of the program module PGM to configure cfg the device DV_{c} and in this context to deploy the software package data SWPD and the configuration data CFGD.

The processor PRC and the program module PGM are designed such that, in order to deploy dpl the software package data SWPD and the configuration data CFGD automatically, firstly - as a first measure - commissioning-related, configuration-relevant information IF_{CMS,cfg} of the device DV_{c} is collected from the system SY_{t,cp} or the device DV_{c} to be commissioned.

How this information IF_{CMS, cfg} is collected?

Generally speaking and as already mentioned in the general part of the specification the information can be acquired by means of "Simple Network Management Protocol"-open standard (*cf.* https://en.wikipedia.org/wiki/Simple Network Management Proto col) and "Discovery and Configuration Protocol"-open standard (*cf.* https://en.wikipedia.org/wiki/Discovery and Configuration Pro tocol ) and further industrial configuration protocols.

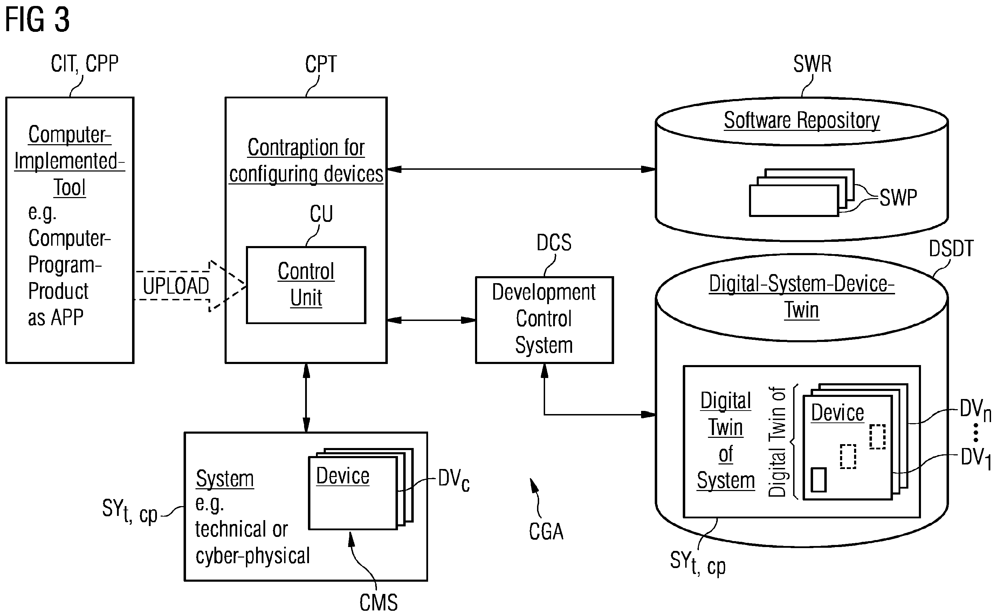

In more detail and as an example for realization according to FIGURE 3 the computer-implemented-tool CIT respectively the computer-program-product CPP as part of the cited functional unit is embedded in a configuration arrangement CGA for configuring the device DV_{c} to be commissioned of the set of devices DV₁...DVₙ for commissioning CMS with the technical or cyber-physical system SY_{t,cp}. This configuration arrangement CGA is formed besides the technical or cyber-physical system SY_{t,cp}, the development control system DCS, the software repository SWR for storing software packages SWP and the digital-system-device-twin DSDT, as already mentioned above regarding the functional unit, by a contraption for configuring devices CPT as a central component of the configuration arrangement CGA, wherein the digital-system-device-twin DSDT includes again each a digital twin of the system SY_{t,cp} and the set of DV₁...DVₙ.

The contraption CPT, which includes a control unit CU being responsible for control tasks in the contraption CPT, is connected with the system SY_{t,cp}, the development control system DCS, the software repository SWR and via the development control system DCS with the digital-system-device-twin DSDT, which is connected with the development control system DCS.

In order to enable the contraption CPT - as depicted in the FIGURE 3 - within the configuration arrangement CGA to configure cfg the device DV_{c} and in this context to deploy dpl the software package data SWPD and the configuration data CFGD, the computer-implemented-tool CIT respectively the computer-program-product CPP or the APP is uploadable into the control unit CU.

Now back to the question above "How this information IF_{CMS,cfg} is collected?" with regard to the depiction in the FIGURE 1.

Due to the explanations regarding the configuration arrangement CGA depicted in the FIGURE 3 the information IF_{CMS,cfg} is collected either from the system SY_{t,cp} via the connection between the contraption CPT with the uploaded computer-implemented-tool CIT respectively the computer-program-product CPP or the APP and the system SY_{t,cp} or from the device DV_{c} to be commissioned being registered with and/or installed into the system on the same way of connection or through manual data entry of the user of the device and the system or the commissioner into the contraption CPT with the uploaded computer-implemented-tool CIT respectively the computer-program-product CPP or the APP.

Moreover the processor PRC and the program module PGM are designed such that, in order to deploy dpl the software package data SWPD and the configuration data CFGD automatically, secondly - as a second measure - engineering data EGD_{DV1...DVn} for the set of devices DV₁...DVₙ from is fetched ftc from the development control system DCS, which has access to device data usable for the configuration provided by the digital-system-device-twin DSDT, due to the connections within the configuration arrangement CGA depicted in the FIGURE 3 between the contraption CPT with the uploaded computer-implemented-tool CIT respectively the computer-program-product CPP or the APP and the development control system DCS and between the development control system DCS and the digital-system-device-twin DSDT.

Furthermore the processor PRC and the program module PGM are designed such that, in order to deploy dpl the software package data SWPD and the configuration data CFGD automatically, thirdly - as a third measure - the software package data SWPD and the configuration data CFGD is identified idf out of the collected information IF_{CMS,cfg} and the fetched engineering data EGD_{DV1...DVn} for the set of devices DV₁...DVₙ by determining stepwise, for each device of the set of devices DV₁...DVₙ, and based on a matching algorithm MAG, whether the collected information IF_{CMS,cfg} matches each with the corresponding fetched engineering data EGD_{DV1...DVn}, wherein the software package data SWPD and the configuration data CFGD are identified idf when a match is determined otherwise in the case of a mismatch and to still identify idf the software package data SWPD and the configuration data CFGD a heuristic approach is used to determine a partially match. As soon as the software package data SWPD and the configuration data CFGD is identified the software package data SWPD is downloaded from the software repository SWR storing software packages SWP.

For this purpose the processor PRC and the program module PGM are further designed such that, in order to deploy dpl the software package data SWPD and the configuration data CFGD automatically, fourthly - as a fourth measure - the software package data SWPD is downloaded from the software repository SWR due to the connection within the configuration arrangement CGA depicted in the FIGURE 3 between the contraption CPT with the uploaded computer-implemented-tool CIT respectively the computer-program-product CPP or the APP and the software repository SWR.

At this point the identified software package data SWPD and identified configuration data CFGD are deployed automatically.

Thus and finally the processor PRC and the program module PGM are designed such that fifthly - as a fifth measure - the identified software package data SWPD and configuration data CFGD are flashed fls or uploaded upl on the device DV_{c} to configure it for the commissioning CMS with the system SY_{t,cp} and its in-system-operation due to the connection within the configuration arrangement CGA depicted in the FIGURE 3 between the contraption CPT with the uploaded computer-implemented-tool CIT respectively the computer-program-product CPP or the APP and the system SY_{t,cp}.

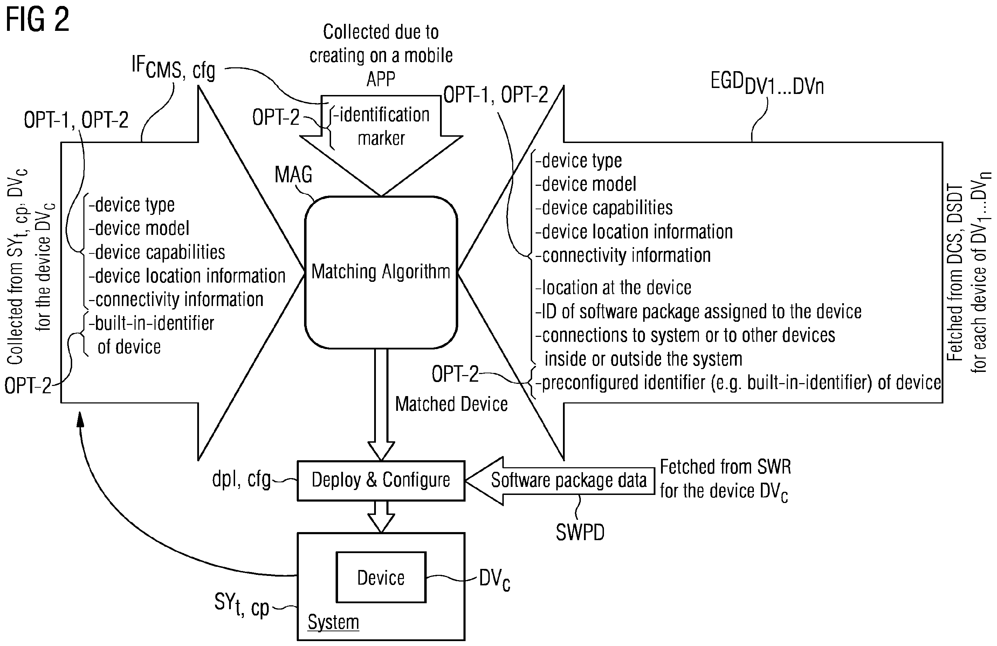

FIGURE 2 shows based on the scenario depicted in the FIGURE 1 what kind of information is included in the commissioning-related, configuration-relevant information IF_{CMS,cfg} and what kind of data is included in the engineering data EGD_{DV1...DVn} so that the matching algorithm MAG is enabled to deploy dpl automatically the software package data SWPD and the configuration data CFGD to configure cfg the device DV_{c}.

For this purpose according to a first option OPT-1
- the commissioning-related, configuration-relevant information IF_{CMS,cfg} include regarding the device DV_{c} at least one of (**i**) a device type, a device model and a device capability, (**ii**) a preconfigured or sensor-measured device location information and (**iii**) a device connectivity information, which could preferably be a MAC-address, used network interfaces or connected networks and gadgets preferably and
- the engineering data EGD_{DV1...DVn} include regarding each device of the set of devices DV₁...DVₙ at least one of (**iv**) a device type, a device model and a device capability, (**v**) a preconfigured or sensor-measured device location information,
(**vi**) a device connectivity information, which could preferably be a MAC-address, used network interfaces or connected networks and gadgets, (**vii**) a location of the device, (**viii**) an ID of software package assigned to the device and (**ix**) connections to the system SY_{t,cp} or to other devices inside or outside the system SY_{t,cp}.

Alternatively, for this purpose according to a second option OPT-2
- the commissioning-related, configuration-relevant information IF_{CMS,cfg} include regarding the device DV_{c} at least one of (**i**) a device type, a device model and a device capability, (**ii**) a preconfigured or sensor-measured device location information and (**iii**) a device connectivity information, which could preferably be a MAC-address, used network interfaces or connected networks and gadgets preferably and (**iv**) a built-in-identifier of the device, which could preferably be a serial number according to a manufacturing process, and/or a "mobile APP"-created identification marker
- the engineering data EGD_{DV1...DVn} include regarding each device of the set of devices DV₁...DVₙ at least one of (**v**) a device type, a device model and a device capability, (**vi**) a preconfigured or sensor-measured device location information,
(**vii**) a device connectivity information, which could preferably be a MAC-address, used network interfaces or connected networks and gadgets, (**viii**) a location of the device, (**ix**) an ID of software package assigned to the device , (**x**) connections to the system SY_{t,cp} or to other devices inside or outside the system SY_{t,cp} and (**xi**) a preconfigured identifier of the device corresponding to the built-in-identifier of (**iv**) and/or a "mobile APP"-created identification marker.

Regarding the third measure presented above in the context of the design of the program module PGM and the processor PRC and the content of the information IF_{CMS,cfg} and the engineering data EGD_{DV1...DVn} according to the first option OPT-1 in the FIGURE 2 the identification idf of the software package data SWPD and the configuration data CFGD by determining stepwise, for each device of the set of devices DV₁...DVₙ, and based on the matching algorithm MAG is carried out step-by-step by a first step <1>, a second step <2> and finally a third step <3> with:
<1> Considering from engineering data EGD_{DV1...DVn} for the set of devices DV₁...DVₙ each only that device where the device location information match with the device location information of the device DV_{c}, wherein the second step <2> is carried out when a match is determined otherwise in the case of a mismatch and to still identify the software package data SWPD and the configuration data CFGD the heuristic approach is used to determine a partially match,
<2> Considering from engineering data EGD_{DV1...DVn} for the devices in the first step <1> each only that device where the device type and the device model match with the device type and the device model of the device DV_{c}, wherein the third step
<3> is carried out when a match is determined otherwise in the case of a mismatch and to still identify the software package data SWPD and the configuration data CFGD the heuristic approach is used to determine a partially match and finally
<3> Considering from engineering data EGD_{DV1...DVn} for the devices in the second step <2> each only that device where the device connectivity information match with the device connectivity information of the device DV_{c}, wherein the software package data SWPD and the configuration data CFGD are identified when a match is determined otherwise in the case of a mismatch and to still identify the software package data SWPD and the configuration data CFGD the heuristic approach is used to determine a partially match.

Moreover, regarding the third measure presented above in the context of the design of the program module PGM and the processor PRC and the content of the information IF_{CMS,cfg} and the engineering data EGD_{DV1...DVn} according to the secon option OPT-2 in the FIGURE 2 the identification idf of the software package data SWPD and the configuration data CFGD by determining stepwise, for each device of the set of devices DV₁...DVₙ, and based on the matching algorithm MAG is carried out step-by-step by a first step <1>, a second step <2>, a third step <3>, a fourth step <4> and finally a fifth step <5> with:
<1> Considering from engineering data EGD_{DV1...DVn} for the set of devices DV₁...DVₙ each only that device where the device location information match with the device location information of the device DV_{c}, wherein the second step <2> is carried out when a match is determined otherwise in the case of a mismatch and to still identify the software package data SWPD and the configuration data CFGD the heuristic approach is used to determine a partially match,
<2> Considering from engineering data EGD_{DV1...DVn} for the devices in the first step <1> each only that device where the device type and the device model match with the device type and the device model of the device DV_{c}, wherein the third step
<3> is carried out when a match is determined otherwise in the case of a mismatch and to still identify the software package data SWPD and the configuration data CFGD the heuristic approach is used to determine a partially match,
<3> Considering from engineering data EGD_{DV1...DVn} for the devices in the second step <2> each only that device where the device connectivity information match with the device connectivity information of the device DV_{c}, wherein the fourth step
<4> is carried out when a match is determined otherwise in the case of a mismatch and to still identify the software package data SWPD and the configuration data CFGD the heuristic approach is used to determine a partially match,
<4> Considering when the "mobile APP"-created identification marker is created from engineering data EGD_{DV1...DVn} for the devices in the third step <3> each only that device with the same identification marker as the identification marker of the device DV_{c} otherwise all the devices from the third step
<3> are considered and the fifth step <5> is carried out, and finally
<5> If the fourth step <4> results in a single device of the devices in the third step <3> the software package data SWPD and the configuration data CFGD are identified.

Furthermore, regarding the third measure presented above in the context of the design of the program module PGM and the processor PRC and in the case of the mismatch due to inconsistencies caused by the fact that either the system SY_{t,cp} is built partially different than engineered according to and shown by the digital-system-device-twin DSDT or the commissioning-related, configuration-relevant information IF_{CMS,cfg} of the device DV_{c} is incomplete or wrong the heuristic approach is adapted to the inconsistencies to find an appropriate match otherwise if no appropriate match can be found an resolution engineer is a resolution engineer is involved to commission the device DV_{c}.

When this aspect of the mismatch due to inconsistencies is extended on the content of the information IF_{CMS,cfg} the following is applicable:
If the inconsistency according to the information IF_{CMS,cfg} of the device DV_{c} including the device location information shows a wrong location of the device DV_{c}, a device of the set of devices DV₁...DVₙ next to the wrong location is taken by the heuristic approach, or if the inconsistency according to the information IF_{CMS,cfg} of the device DV_{c} including the device type information shows a wrong type of the device DV_{c}, a device of the set of devices DV₁...DVₙ with better device capabilities is taken by the heuristic approach, or if the inconsistency according to the information IF_{CMS,cfg} of the device DV_{c} including the device connectivity information shows a wrong connectivity of the device DV_{c} in the system SY_{t,cp}, a device of the set of devices DV₁...DVₙ with a better device connectivity is taken by the heuristic approach.

## Claims

1. Method for configuring (cfg) a device (DV_{c}) to be commissioned of a set of devices (DV₁...DVₙ) for commissioning (CMS) with a technical or cyber-physical system (SY_{t,cp}), by which software package data (SWPD), in particular being downloaded from a software repository (SWR) storing software packages (SWP), and configuration data (CFGD) to configure the device (DV_{c}) being registered (rgs) with or installed (isl) into and registered (rgs) with the system (SY_{t,cp}) are used for the commissioning (CMS) with the system (SY_{t,cp}) and its in-system-operation, wherein:
**a**) automatically deploying (dpl) the software package data (SWPD) and the configuration data (CFGD) by
**a1**) collecting (clt) commissioning-related, configuration-relevant information (IF_{CMS,cfg}) of the device (DV_{c}) from the system (SY_{t,cp}) or the device (DV_{c}) to be commissioned,
**a2**) fetching (ftc) engineering data (EGD_{DV1...DVn}) for the set of devices (DV₁...DVₙ) from a development control system (DCS) with access to device data usable for the configuration provided by a digital-system-device-twin (DSDT),
**a3**) identifying (idf) the software package data (SWPD) and the configuration data (CFGD) out of the collected information (IF_{CMS,cfg}) and the fetched engineering data (EGD_{DV1...DVn}) for the set of devices (DV₁...DVₙ) by determining stepwise, for each device of the set of devices (DV₁...DVₙ), and based on a matching algorithm (MAG), whether the collected information (IF_{CMS,cfg}) matches each with the corresponding fetched engineering data (EGD_{DV1...DVn}), wherein the software package data (SWPD) and the configuration data (CFGD) are identified (idf) when a match is determined otherwise in the case of a mismatch and to still identify (idf) the software package data (SWPD) and the configuration data (CFGD) a heuristic approach is used to determine a partially match,
**b**) flashing or uploading the identified software package data (SWPD) and configuration data (CFGD) on the device (DV_{c}) to configure it for the commissioning (CMS) with the system (SY_{t,cp}) and its in-system-operation.

2. Method according to claim 1, wherein the commissioning-related, configuration-relevant information (IF_{CMS,cfg}) include regarding the device (DV_{c}) at least one of either (OPT-1)
a) a device type, a device model and a device capability,
b) a preconfigured or sensor-measured device location information and
c) a device connectivity information, e.g. MAC-address, used network interfaces or connected networks and gadgets.
or (OPT-2)
a) a device type, a device model and a device capability,
b) a preconfigured or sensor-measured device location information,
c) a device connectivity information, e.g. MAC-address, used network interfaces or connected networks and gadgets, and
d) a built-in-identifier of the device, e.g. serial number according to a manufacturing process, and/or a "mobile APP"-created identification marker.

3. Method according to claim 2, wherein the engineering data (EGD_{DV1...DVn}) include regarding each device of the set of devices (DV₁...DVₙ) at least one of either (OPT-1)
e) a device type, a device model and a device capability,
f) a preconfigured or sensor-measured device location information,
g) a device connectivity information, e.g. MAC-address, used network interfaces or connected networks and gadgets,
h) a location of the device,
i) an ID of software package assigned to the device and
j) connections to the system (SY_{t,cp}) or to other devices inside or outside the system (SY_{t,cp}).
or (OPT-2)
e) a device type, a device model and a device capability,
f) a preconfigured or sensor-measured device location information,
g) a device connectivity information, e.g. MAC-address, used network interfaces or connected networks and gadgets,
h) a location of the device,
i) an ID of software package assigned to the device,
j) connections to the system (SY_{t,cp}) or to other devices inside or outside the system (SY_{t,cp}) and
k) a preconfigured identifier of the device corresponding to the built-in-identifier of d) in the claim 2 and/or a "mobile APP"-created identification marker.

4. Method according to claims 2 and 3, wherein the identification (idf) of the software package data (SWPD) and the configuration data (CFGD) by determining stepwise, for each device of the set of devices (DV₁...DVₙ), and based on the matching algorithm (MAG) is carried out step-by-step thereby using the following steps, (**i**) in the "either (OPT-1)"-cases of the claims 2 and 3 a first step <1>, a second step <2> and finally a third step <3> **or** (**ii**) in the "or (OPT-2)"-cases of the claims 2 and 3 a first step <1>, a second step <2>, a third step <3>, a fourth step <4> and finally a fifth step <5>,:
(**i**)
<1> Considering from engineering data (EGD_{DV1...DVn}) for the set of devices (DV₁...DVₙ) each only that device where the device location information match with the device location information of the device (DV_{c}), wherein the second step <2> is carried out when a match is determined otherwise in the case of a mismatch and to still identify the software package data (SWPD) and the configuration data (CFGD) the heuristic approach is used to determine a partially match,
<2> Considering from engineering data (EGD_{DV1...DVn}) for the devices in the first step <1> each only that device where the device type and the device model match with the device type and the device model of the device (DV_{c}), wherein the third step <3> is carried out when a match is determined otherwise in the case of a mismatch and to still identify the software package data (SWPD) and the configuration data (CFGD) the heuristic approach is used to determine a partially match, and finally
<3> Considering from engineering data (EGD_{DV1...DVn}) for the devices in the second step <2> each only that device where the device connectivity information match with the device connectivity information of the device (DV_{c}), wherein the software package data (SWPD) and the configuration data (CFGD) are identified when a match is determined otherwise in the case of a mismatch and to still identify the software package data (SWPD) and the configuration data (CFGD) the heuristic approach is used to determine a partially match, **or**
(**ii**)
<1> Considering from engineering data (EGD_{DV1...DVn}) for the set of devices (DV₁...DVₙ) each only that device where the device location information match with the device location information of the device (DV_{c}), wherein the second step <2> is carried out when a match is determined otherwise in the case of a mismatch and to still identify the software package data (SWPD) and the configuration data (CFGD) the heuristic approach is used to determine a partially match,
<2> Considering from engineering data (EGD_{DV1...DVn}) for the devices in the first step <1> each only that device where the device type and the device model match with the device type and the device model of the device (DV_{c}), wherein the third step <3> is carried out when a match is determined otherwise in the case of a mismatch and to still identify the software package data (SWPD) and the configuration data (CFGD) the heuristic approach is used to determine a partially match,
<3> Considering from engineering data (EGD_{DV1...DVn}) for the devices in the second step <2> each only that device where the device connectivity information match with the device connectivity information of the device (DV_{c}), wherein the fourth step <4> is carried out when a match is determined otherwise in the case of a mismatch and to still identify the software package data (SWPD) and the configuration data (CFGD) the heuristic approach is used to determine a partially match,
<4> Considering when the "mobile APP"-created identification marker is created from engineering data (EGD_{DV1...DVn}) for the devices in the third step <3> each only that device with the same identification marker as the identification marker of the device (DV_{c}) otherwise all the devices from the third step <3> are considered and the fifth step <5> is carried out, and finally
<5> If the fourth step <4> results in a single device of the devices in the third step <3> the software package data (SWPD) and the configuration data (CFGD) are identified.

5. Method according to one of the claims 1 to 4, wherein in the case of the mismatch due to inconsistencies caused by the fact that the system (SY_{t,cp}) is built partially different than engineered according to and shown by the digital-system-device-twin (DSDT) or the commissioning-related, configuration-relevant information (IF_{CMS,cfg}) of the device (DV_{c}) is incomplete or wrong the heuristic approach is adapted to the inconsistencies to find an appropriate match otherwise if no appropriate match can be found an resolution engineer is a resolution engineer is involved to commission the device (DV_{c}).

6. Method according to claim 2 and 5, wherein
- if the inconsistency according to the information (IF_{CMS,cfg}) of the device (DV_{c}) including the device location information shows a wrong location of the device (DV_{c}), a device of the set of devices (DV₁...DVₙ) next to the wrong location is taken by the heuristic approach, or
- if the inconsistency according to the information (IF_{CMS,cfg}) of the device (DV_{c}) including the device type information shows a wrong type of the device (DV_{c}), a device of the set of devices (DV₁...DVₙ) with better device capabilities is taken by the heuristic approach, or
- if the inconsistency according to the information (IF_{CMS,cfg}) of the device (DV_{c}) including the device connectivity information shows a wrong connectivity of the device (DV_{c}) in the system (SY_{t,cp}), a device of the set of devices (DV₁...DVₙ) with a better device connectivity is taken by the heuristic approach.

7. Computer-Implemented-Tool (CIT), in particular a Computer-Program-Product (CPP) designed as an APP, for configuring (cfg) a device (DV_{c}) to be commissioned of a set of devices (DV₁...DVₙ) for commissioning (CMS) with a technical or cyber-physical system (SY_{t,cp}), by which
software package data (SWPD), in particular being downloaded from a software repository (SWR) storing software packages (SWP), and configuration data (CFGD) to configure the device (DV_{c}) being registered (rgs) with or installed (isl) into and registered (rgs) with the system (SY_{t,cp}) are used for the commissioning (CMS) with the system (SY_{t,cp}) and its in-system-operation,
wherein a non-transitory, processor-readable storage medium (STM) having processor-readable program-instructions of a program module (PGM) for configuring (cfg) the device (DV_{c}) stored in the non-transitory, processor-readable storage medium (STM) and a processor (PRC) connected with the storage medium (STM) executing the processor-readable program-instructions of the program module (PGM) for configuring (cfg) the device (DV_{c}), wherein the program module (PGM) and the processor (PRC) are designed such that
**a**) the software package data (SWPD) and the configuration data (CFGD) are deployed (dpl) automatically by
**a1**) collecting (clt) commissioning-related, configuration-relevant information (IF_{CMS,cfg}) of the device (DV_{c}) from the system (SY_{t,cp}) or the device (DV_{c}) to be commissioned,
**a2**) fetching (ftc) engineering data (EGD_{DV1...DVn}) for the set of devices (DV₁...DVₙ) from a development control system (DCS) with access to device data usable for the configuration provided by a digital-system-device-twin (DSDT),
**a3**) identifying (idf) the software package data (SWPD) and the configuration data (CFGD) out of the collected information (IF_{CMS,cfg}) and the fetched engineering data (EGD_{DV1...DVn}) for the set of devices (DV₁...DVₙ) by determining stepwise, for each device of the set of devices (DV₁...DVₙ), and based on a matching algorithm (MAG), whether the collected information (IF_{CMS,cfg}) matches each with the corresponding fetched engineering data (EGD_{DV1...DVn}), wherein the software package data (SWPD) and the configuration data (CFGD) are identified (idf) when a match is determined otherwise in the case of a mismatch and to still identify (idf) the software package data (SWPD) and the configuration data (CFGD) a heuristic approach is used to determine a partially match,
**b**) flashing (fls) or uploading (upl) the identified software package data (SWPD) and configuration data (CFGD) on the device (DV_{c}) to configure it for the commissioning (CMS) with the system (SY_{t,cp}) and its in-system-operation.

8. Computer-Implemented-Tool (CIT) according to claim 7, wherein the commissioning-related, configuration-relevant information (IF_{CMS,cfg}) include regarding the device (DV_{c}) at least one of either (OPT-1)
a) a device type, a device model and a device capability,
b) a preconfigured or sensor-measured device location information and
c) a device connectivity information, e.g. MAC-address, used network interfaces or connected networks and gadgets.
or (OPT-2)
a) a device type, a device model and a device capability,
b) a preconfigured or sensor-measured device location information,
c) a device connectivity information, e.g. MAC-address, used network interfaces or connected networks and gadgets, and
d) a built-in-identifier of the device, e.g. serial number according to a manufacturing process, and/or a "mobile APP"-created identification marker.

9. Computer-Implemented-Tool (CIT) according to claim 7 or 8, wherein the engineering data (EGD_{DV1...DVn}) include regarding each device of the set of devices (DV₁...DVₙ) at least one of either (OPT-1)
e) a device type, a device model and a device capability,
f) a preconfigured or sensor-measured device location information,
g) a device connectivity information, e.g. MAC-address, used network interfaces or connected networks and gadgets,
h) a location of the device,
i) an ID of software package assigned to the device and
j) connections to the system (SY_{t,cp}) or to other devices inside or outside the system (SY_{t,cp}).
or (OPT-2)
e) a device type, a device model and a device capability,
f) a preconfigured or sensor-measured device location information,
g) a device connectivity information, e.g. MAC-address, used network interfaces or connected networks and gadgets,
h) a location of the device,
i) an ID of software package assigned to the device,
j) connections to the system (SY_{t,cp}) or to other devices inside or outside the system (SY_{t,cp}) and
k) a preconfigured identifier of the device corresponding to the built-in-identifier of d) in the claim 2 and/or a "mobile APP"-created identification marker.

10. Computer-Implemented-Tool (CIT) according to claims 8 and 9, wherein
the program module (PGM) and the processor (PRC) are designed such that
the identification (idf) of the software package data (SWPD) and the configuration data (CFGD) by determining stepwise, for each device of the set of devices (DV₁...DVₙ), and based on the matching algorithm (MAG) is carried out step-by-step thereby using the following steps, (**i**) in the "either (OPT-1)"-cases of the claims 2 and 3 a first step <1>, a second step <2> and finally a third step <3> **or** (**ii**) in the "or (OPT-2)"-cases of the claims 2 and 3 a first step <1>, a second step <2>, a third step <3>, a fourth step <4> and finally a fifth step <5>,:
(**i**)
<1> Considering from engineering data (EGD_{DV1...DVn}) for the set of devices (DV₁...DVₙ) each only that device where the device location information match with the device location information of the device (DV_{c}), wherein the second step <2> is carried out when a match is determined otherwise in the case of a mismatch and to still identify the software package data (SWPD) and the configuration data (CFGD) the heuristic approach is used to determine a partially match,
<2> Considering from engineering data (EGD_{DV1...DVn}) for the devices in the first step <1> each only that device where the device type and the device model match with the device type and the device model of the device (DV_{c}), wherein the third step <3> is carried out when a match is determined otherwise in the case of a mismatch and to still identify the software package data (SWPD) and the configuration data (CFGD) the heuristic approach is used to determine a partially match, and finally
<3> Considering from engineering data (EGD_{DV1...DVn}) for the devices in the second step <2> each only that device where the device connectivity information match with the device connectivity information of the device (DV_{c}), wherein the software package data (SWPD) and the configuration data (CFGD) are identified when a match is determined otherwise in the case of a mismatch and to still identify the software package data (SWPD) and the configuration data (CFGD) the heuristic approach is used to determine a partially match, **or**
(**ii**)
<1> Considering from engineering data (EGD_{DV1...DVn}) for the set of devices (DV₁...DVₙ) each only that device where the device location information match with the device location information of the device (DV_{c}), wherein the second step <2> is carried out when a match is determined otherwise in the case of a mismatch and to still identify the software package data (SWPD) and the configuration data (CFGD) the heuristic approach is used to determine a partially match,
<2> Consider from engineering data (EGD_{DV1...DVn}) for the devices in the first step <1> each only that device where the device type and the device model match with the device type and the device model of the device (DV_{c}), wherein the third step <3> is carried out when a match is determined otherwise in the case of a mismatch and to still identify the software package data (SWPD) and the configuration data (CFGD) the heuristic approach is used to determine a partially match,
<3> Considering from engineering data (EGD_{DV1...DVn}) for the devices in the second step <2> each only that device where the device connectivity information match with the device connectivity information of the device (DV_{c}), wherein the fourth step <4> is carried out when a match is determined otherwise in the case of a mismatch and to still identify the software package data (SWPD) and the configuration data (CFGD) the heuristic approach is used to determine a partially match,
<4> Considering when the "mobile APP"-created identification marker is created from engineering data (EGD_{DV1...DVn}) for the devices in the third step <3> each only that device with the same identification marker as the identification marker of the device (DV_{c}) otherwise all the devices from the third step <3> are considered and the fifth step <5> is carried out, and finally
<5> If the fourth step <4> results in a single device of the devices in the third step <3> the software package data (SWPD) and the configuration data (CFGD) are identified.

11. Computer-Implemented-Tool (CIT) according to one of the claims 7 to 10, wherein
the program module (PGM) and the processor (PRC) are designed such that
in the case of the mismatch due to inconsistencies caused by the fact that (**i**) the system (SY_{t,cp}) is built partially different than engineered according to and shown by the digital-system-device-twin (DSDT) or (**ii**) the commissioning-related, configuration-relevant information (IF_{CMS,cfg}) of the device (DV_{c}) is incomplete or wrong the heuristic approach is adapted to the inconsistencies to find an appropriate match otherwise if no appropriate match can be found an resolution engineer is a resolution engineer is involved to commission the device (DV_{c}).

12. Computer-Implemented-Tool (CIT) according to claim 8 and 11, wherein the program module (PGM) and the processor (PRC) are designed such that
- if the inconsistency according to the information (IF_{CMS,cfg}) of the device (DV_{c}) including the device location information shows a wrong location of the device (DV_{c}), a device of the set of devices (DV₁...DVₙ) next to the wrong location is taken by the heuristic approach, or
- if the inconsistency according to the information (IF_{CMS,cfg}) of the device (DV_{c}) including the device type information shows a wrong type of the device (DV_{c}), a device of the set of devices (DV₁...DVₙ) with better device capabilities is taken by the heuristic approach, or
- if the inconsistency according to the information (IF_{CMS,cfg}) of the device (DV_{c}) including the device connectivity information shows a wrong connectivity of the device (DV_{c}) in the system (SY_{t,cp}), a device of the set of devices (DV₁...DVₙ) with a better device connectivity is taken by the heuristic approach.

13. Contraption (CPT) for configuring (cfg) a device (DV_{c}) to be commissioned of a set of devices (DV₁...DVₙ) for commissioning (CMS) with a technical or cyber-physical system (SY_{t,cp}), including a control unit (CU) being responsible for control tasks in the contraption (CPT), wherein a computer-implemented tool (CIT) according to one of the claims 7 to 12 is uploadable into the control unit (CU) for carrying out the method according to one of the claims 1 to 6.

14. Configuration arrangement (CGA) for configuring (cfg) a device (DV_{c}) to be commissioned of a set of devices (DV₁...DVₙ) for commissioning (CMS) with a technical or cyber-physical system (SY_{t,cp}), wherein a contraption (CPT) according to claim 13 being connected to the system (SY_{t,cp}), a software repository (SWR) for storing software package data (SWPD) connected with the contraption (CPT), a development control system (DCS) connected with the contraption (CPT) and a digital-system-device-twin (DSDT) for storing device configurations data of the set of devices (DV₁...DVₙ) connected to the development control system (DCS), which form a functional unit such that the method according to one of the claims 1 to 6 is carried out.

## Patentansprüche

1. Verfahren zum Konfigurieren (cfg) einer in Betrieb zu nehmenden Vorrichtung (DV_{c}) eines Vorrichtungssatzes (DV₁ ... DVₙ) zur Inbetriebnahme (CMS) mit einem technischen oder cyber-physikalischen System (SY_{t,cp}), bei dem Softwarepaketdaten (SWPD), insbesondere aus einem Softwarepakete (SWP) speichernden Software-Repository (SWR) heruntergeladen, und Konfigurationsdaten (CFGD) zum Konfigurieren der Vorrichtung (DV_{c}), die in dem System (SY_{t,cp}) registriert (rgs) oder installiert (isl) und registriert (rgs) wird, für die Inbetriebnahme (CMS) mit dem System (SY_{t,cp}) und dessen systeminternem Betrieb verwendet werden, wobei:
**a**) automatisches Einsetzen (dpl) der Softwarepaketdaten (SWPD) und der Konfigurationsdaten (CFGD) durch
**a1**) Sammeln (clt) von inbetriebnahmebezogenen, konfigurationsrelevanten Informationen (IF_{CMS,cfg}) der Vorrichtung (DV_{c}) in dem System (SY_{t,cp}) oder der in Betrieb zu nehmenden Vorrichtung (DV_{c}),
**a2**) Abrufen (ftc) von Entwurfsdaten (EGD_{DV1} ... DVₙ) für den Vorrichtungssatz (DV₁ ... DVₙ) von einem Entwicklungssteuersystem (DCS) mit Zugriff auf für die Konfiguration verwendbare Vorrichtungsdaten, die von einem digitalen System-Vorrichtungs-Zwilling (DSDT) bereitgestellt werden,
**a3**) Identifizieren (idf) der Softwarepaketdaten (SWPD) und der Konfigurationsdaten (CFGD) in den gesammelten Informationen (IF_{CMS,cfg}) und den abgerufenen Entwurfsdaten (EGD_{DV1 ... Dvn}) für den Vorrichtungssatz (DV₁ ... DVₙ) durch Bestimmen für jede Vorrichtung des Vorrichtungssatzes (DV₁ ... DVₙ) Schritt für Schritt und basierend auf einem Übereinstimmungsalgorithmus (MAG), ob die gesammelten Informationen (IF_{CMS ,cfg}) jeweils mit den entsprechenden abgerufenen Entwurfsdaten (EGD_{DV1} ... _{DVn} ) übereinstimmen, wobei die Softwarepaketdaten (SWPD) und die Konfigurationsdaten (CFGD) identifiziert (idf) werden, wenn eine Übereinstimmung bestimmt wird, wobei anderenfalls im Falle einer Nichtübereinstimmung und zum weiteren Identifizieren (idf) der Softwarepaketdaten (SWPD) und der Konfigurationsdaten (CFGD) ein heuristischer Ansatz zum Bestimmen einer Teilübereinstimmung verwendet wird,
**b**) Flashen oder Hochladen der identifizierten Softwarepaketdaten (SWPD) und Konfigurationsdaten (CFGD) auf die Vorrichtung (DV_{c}), um sie für die Inbetriebnahme (CMS) mit dem System (SY_{t,cp}) und dessen systeminternen Betrieb zu konfigurieren.

2. Verfahren nach Anspruch 1, wobei die inbetriebnahmebezogenen, konfigurationsrelevanten Informationen (IF_{CMS, cfg}) bezüglich der Vorrichtung (DV_{c}) mindestens eines beinhalten von entweder (OPT-1)
a) einem Vorrichtungstyp, einem Vorrichtungsmodell und einer Vorrichtungsfähigkeit,
b) vorkonfigurierten oder mit einem Sensor gemessenen Vorrichtungsstandortinformationen und
c) Vorrichtungskonnektivitätsinformationen, z. B. MAC-Adresse, verwendete Netzschnittstellen oder verbundene Netzwerke und Gadgets
oder (OPT-2)
a) einem Vorrichtungstyp, einem Vorrichtungsmodell und einer Vorrichtungsfähigkeit,
b) vorkonfigurierten oder mit einem Sensor gemessenen Vorrichtungsstandortinformationen,
c) Vorrichtungskonnektivitätsinformationen, z. B. MAC-Adresse, verwendete Netzschnittstellen oder verbundene Netzwerke und Gadgets und
d) einer eingebauten Kennung der Vorrichtung, z. B. einer Seriennummer gemäß einem Herstellungsprozess, und/oder einer mit einer "mobilen APP" erstellten Identifizierungsmarkierung.

3. Verfahren nach Anspruch 2, wobei
die Entwurfsdaten (EGD_{DV1} ... _{Dvn}) bezüglich jeder Vorrichtung des Vorrichtungssatzes (DV₁ ... DVₙ) mindestens eines beinhalten von entweder (OPT-1)
e) einem Vorrichtungstyp, einem Vorrichtungsmodell und einer Vorrichtungsfähigkeit,
f) vorkonfigurierten oder mit einem Sensor gemessenen Vorrichtungsstandortinformationen,
g) Vorrichtungskonnektivitätsinformationen, z. B. MAC-Adresse, verwendete Netzschnittstellen oder verbundene Netzwerke und Gadgets,
h) einem Vorrichtungsstandort,
i) einer ID des der Vorrichtung zugewiesenen Softwarepakets und
j) Verbindungen zu dem System (SY_{t,cp}) oder zu anderen Vorrichtungen innerhalb oder außerhalb des Systems (SY_{t,cp}) oder (OPT-2)
e) einem Vorrichtungstyp, einem Vorrichtungsmodell und einer Vorrichtungsfähigkeit,
f) vorkonfigurierten oder mit einem Sensor gemessenen Vorrichtungsstandortinformationen,
g) Vorrichtungskonnektivitätsinformationen, z. B. MAC-Adresse, verwendete Netzschnittstellen oder verbundene Netzwerke und Gadgets,
h) einem Vorrichtungsstandort,
i) einer ID des der Vorrichtung zugewiesenen Softwarepakets,
j) Verbindungen zu dem System (SY_{t,cp}) oder zu anderen Vorrichtungen innerhalb oder außerhalb des Systems (SY_{t,cp}) und
k) einer vorkonfigurierten Kennung der Vorrichtung, die der eingebauten Kennung von d) in Anspruch 2 entspricht, und/oder einer mit einer "mobilen APP" erstellten Identifizierungsmarkierung.

4. Verfahren nach einem der Ansprüche 2 und 3, wobei die Identifizierung (idf) der Softwarepaketdaten (SWPD) und der Konfigurationsdaten (CFGD) durch Bestimmen für jede Vorrichtung des Vorrichtungssatzes (DV₁ ... DVₙ) Schritt für Schritt und basierend auf dem Übereinstimmungsalgorithmus (MAG) schrittweise durchgeführt wird, wobei die folgenden Schritte verwendet werden, (i) in den Fällen "entweder (OPT-1)" in Anspruch 2 und 3 ein erster Schritt <1>, ein zweiter Schritt <2> und schließlich ein dritter Schritt <3> **oder** (**ii**) in den Fällen "oder (OPT-2)" in Anspruch 2 und 3 ein erster Schritt <1>, ein zweiter Schritt <2>, ein dritter Schritt <3>, ein vierter Schritt <4> und schließlich ein fünfter Schritt <5>:
(**i**)
<1> Berücksichtigen von jeweils nur der Vorrichtung, bei der die Vorrichtungsstandortinformationen mit den Vorrichtungsstandortinformationen der Vorrichtung (DV_{c}) übereinstimmen, in den Entwurfsdaten (EGD_{DV1} ... _{DVn}) für den Vorrichtungssatz (DV₁ ... DVₙ), wobei der zweite Schritt <2> durchgeführt wird, wenn eine Übereinstimmung festgestellt wird, wobei anderenfalls im Falle einer Nichtübereinstimmung und zum weiteren Identifizieren der Softwarepaketdaten (SWPD) und der Konfigurationsdaten (CFGD) ein heuristischer Ansatz zum Bestimmen einer Teilübereinstimmung verwendet wird,
<2> Berücksichtigen von jeweils nur der Vorrichtung, bei der der Vorrichtungstyp und das Vorrichtungsmodell mit dem Vorrichtungstyp und dem Vorrichtungsmodell der Vorrichtung (DV_{c}) übereinstimmen, in den Entwurfsdaten (EGD_{DV1} ... _{Dvn}) für die Vorrichtungen aus dem ersten Schritt <1>, wobei der dritte Schritt <3> durchgeführt wird, wenn eine Übereinstimmung festgestellt wird, wobei anderenfalls im Falle einer Nichtübereinstimmung und zum weiteren Identifizieren der Softwarepaketdaten (SWPD) und der Konfigurationsdaten (CFGD) ein heuristischer Ansatz zum Bestimmen einer Teilübereinstimmung verwendet wird, und schließlich
<3> Berücksichtigen von jeweils nur der Vorrichtung, bei der die Vorrichtungskonnektivitätsinformationen mit den Vorrichtungskonnektivitätsinformationen der Vorrichtung (DV_{c}) übereinstimmen, in den Entwurfsdaten (EGD_{DV1} ... _{Dvn}) für die Vorrichtungen aus dem zweiten Schritt <2>, wobei die Softwarepaketdaten (SWPD) und die Konfigurationsdaten (CFGD) identifiziert werden, wenn eine Übereinstimmung festgestellt wird, wobei anderenfalls im Falle einer Nichtübereinstimmung und zum weiteren Identifizieren der Softwarepaketdaten (SWPD) und der Konfigurationsdaten (CFGD) ein heuristischer Ansatz zum Bestimmen einer Teilübereinstimmung verwendet wird, **oder**
(**ii**)
<1> Berücksichtigen von jeweils nur der Vorrichtung, bei der die Vorrichtungsstandortinformationen mit den Vorrichtungsstandortinformationen der Vorrichtung (DV_{c}) übereinstimmen, in den Entwurfsdaten (EGD_{DV1} ... _{Dvn}) für den Vorrichtungssatz (DV₁ ... DVₙ), wobei der zweite Schritt <2> durchgeführt wird, wenn eine Übereinstimmung festgestellt wird, wobei anderenfalls im Falle einer Nichtübereinstimmung und zum weiteren Identifizieren der Softwarepaketdaten (SWPD) und der Konfigurationsdaten (CFGD) ein heuristischer Ansatz zum Bestimmen einer Teilübereinstimmung verwendet wird,
<2> Berücksichtigen von jeweils nur der Vorrichtung, bei der der Vorrichtungstyp und das Vorrichtungsmodell mit dem Vorrichtungstyp und dem Vorrichtungsmodell der Vorrichtung (DV_{c}) übereinstimmen, in den Entwurfsdaten (EGD_{DV1} ... _{Dvn}) für die Vorrichtungen aus dem ersten Schritt <1>, wobei der dritte Schritt <3> durchgeführt wird, wenn eine Übereinstimmung festgestellt wird, wobei anderenfalls im Falle einer Nichtübereinstimmung und zum weiteren Identifizieren der Softwarepaketdaten (SWPD) und der Konfigurationsdaten (CFGD) ein heuristischer Ansatz zum Bestimmen einer Teilübereinstimmung verwendet wird,
<3> Berücksichtigen von jeweils nur der Vorrichtung, bei der die Vorrichtungskonnektivitätsinformationen mit den Vorrichtungskonnektivitätsinformationen der Vorrichtung (DV_{c}) übereinstimmen, in den Entwurfsdaten (EGD_{DV1} ... _{Dvn}) für die Vorrichtungen aus dem zweiten Schritt <2>, wobei der vierte Schritt <4> durchgeführt wird, wenn eine Übereinstimmung festgestellt wird, wobei anderenfalls im Falle einer Nichtübereinstimmung und zum weiteren Identifizieren der Softwarepaketdaten (SWPD) und der Konfigurationsdaten (CFGD) ein heuristischer Ansatz zum Bestimmen einer Teilübereinstimmung verwendet wird,
<4> Berücksichtigen von jeweils nur der Vorrichtung mit der gleichen Identifizierungsmarkierung wie die Identifizierungsmarkierung der Vorrichtung (DV_{c}), wenn die mit einer "mobilen APP" erstellte Identifizierungsmarkierung aus Entwurfsdaten (EGD_{DV1} ... _{Dvn}) für Vorrichtungen in dem dritten Schritt <3> erstellt wurde, wobei anderenfalls alle die Vorrichtungen aus dem dritten Schritt <3> berücksichtigt werden und der fünfte Schritt <5> durchgeführt wird, und schließlich
<5> Identifizieren der Softwarepaketdaten (SWPD) und der Konfigurationsdaten (CFGD), wenn der vierte Schritt <4> eine einzige Vorrichtung der Vorrichtungen des dritten Schritts <3> ergibt.

5. Verfahren nach einem der Ansprüche 1 bis 4, wobei im Falle der Nichtübereinstimmung aufgrund von Inkonsistenzen, die durch die Tatsache verursacht werden, dass das System (SY_{t,cp}) teilweise anders gebaut ist als entworfen gemäß dem digitalen System-Vorrichtungs-Zwilling (DSDT) und dadurch gezeigt oder die inbetriebnahmebezogenen, konfigurationsrelevanten Informationen (IF_{CMS,cfg}) der Vorrichtung (DV_{c}) unvollständig oder falsch sind, der heuristische Ansatz an die Inkonsistenzen angepasst wird, um eine angemessene Übereinstimmung zu finden, wobei anderenfalls, wenn keine angemessene Übereinstimmung gefunden werden kann, ein Lösungsingenieur hinzugezogen wird, um die Vorrichtung (DV_{c}) in Betrieb zu nehmen.

6. Verfahren nach Anspruch 2 und 5, wobei,
- wenn die Inkonsistenz gemäß den Informationen (IF_{CMS,cfg}) der Vorrichtung (DV_{c}), beinhaltend die Vorrichtungsstandortinformationen, einen falschen Standort der Vorrichtung (DV_{c}) zeigt, eine Vorrichtung des Vorrichtungssatzes (DV₁ ... DVₙ), die benachbart zu dem falschen Standort ist, für den heuristischen Ansatz herangezogen wird, oder
- wenn die Inkonsistenz gemäß den Informationen (IF_{CMS,cfg}) der Vorrichtung (DV_{c}), beinhaltend die Vorrichtungstypinformationen, einen falschen Typ der Vorrichtung (DV_{c}) zeigt, eine Vorrichtung des Vorrichtungssatzes (DV₁ ... DVₙ), die bessere Vorrichtungsfähigkeiten aufweist, für den heuristischen Ansatz herangezogen wird, oder
- wenn die Inkonsistenz gemäß den Informationen (IF_{CMS,cfg}) der Vorrichtung (DV_{c}), beinhaltend die Vorrichtungskonnektivitätsinformationen, eine falsche Konnektivität der Vorrichtung (DV_{c}) in dem System (SY_{t,cp}) zeigt, eine Vorrichtung des Vorrichtungssatzes (DV₁ ... DVₙ), die eine bessere Vorrichtungskonnektivität aufweist, für den heuristischen Ansatz herangezogen wird.

7. Computerimplementiertes Werkzeug (CIT), insbesondere ein als APP ausgestaltetes Computerprogrammprodukt (CPP), zum Konfigurieren (cfg) einer in Betrieb zu nehmenden Vorrichtung (DV_{c}) eines Vorrichtungssatzes (DV₁ ... DVₙ) für die Inbetriebnahme (CMS) mit einem technischen oder cyber-physikalischen System (SY_{t,cp}), bei dem
Softwarepaketdaten (SWPD), insbesondere aus einem Softwarepakete (SWP) speichernden Software-Repository (SWR) heruntergeladen, und Konfigurationsdaten (CFGD) zum Konfigurieren der Vorrichtung (DV_{c}), die in dem System (SY_{t,cp}) registriert (rgs) oder installiert (isl) und registriert (rgs) wird, für die Inbetriebnahme (CMS) mit dem System (SY_{t,cp}) und dessen systeminternem Betrieb verwendet werden, wobei ein nichttransitorisches, prozessorlesbares Speichermedium (STM) prozessorlesbare Programmanweisungen eines Programmmoduls (PGM) zum Konfigurieren (cfg) der Vorrichtung (DV_{c}) in dem nichttransitorischen, prozessorlesbaren Speichermedium (STM) gespeichert aufweist und ein mit dem Speichermedium (STM) verbundener Prozessor (PRC) die prozessorlesbaren Programmanweisungen des Programmmoduls (PGM) zur Konfiguration (cfg) der Vorrichtung (DV_{c}) ausführt, wobei das Programmmodul (PGM) und der Prozessor (PRC) derart ausgebildet sind, dass
**a**) die Softwarepaketdaten (SWPD) und die Konfigurationsdaten (CFGD) automatisches eingesetzt werden (dpl) durch
**a1**) Sammeln (clt) von inbetriebnahmebezogenen, konfigurationsrelevanten Informationen (IF_{CMS,cfg}) der Vorrichtung (DV_{c}) in dem System (SY_{t,cp}) oder der in Betrieb zu nehmenden Vorrichtung (DV_{c}),
**a2**) Abrufen (ftc) von Entwurfsdaten (EGD_{DV1} ... DVₙ) für den Vorrichtungssatz (DV₁ ... DVₙ) von einem Entwicklungssteuersystem (DCS) mit Zugriff auf für die Konfiguration verwendbare Vorrichtungsdaten, die von einem digitalen System-Vorrichtungs-Zwilling (DSDT) bereitgestellt werden,
**a3**) Identifizieren (idf) der Softwarepaketdaten (SWPD) und der Konfigurationsdaten (CFGD) in den gesammelten Informationen (IF_{CMS,cfg}) und den abgerufenen Entwurfsdaten (EGD_{DV1 ... Dvn}) für den Vorrichtungssatz (DV₁ ... DVₙ) durch Bestimmen für jede Vorrichtung des Vorrichtungssatzes (DV₁ ... DVₙ) Schritt für Schritt und basierend auf einem Übereinstimmungsalgorithmus (MAG), ob die gesammelten Informationen (IF_{CMS ,cfg} ) jeweils mit den entsprechenden abgerufenen Entwurfsdaten (EGD_{DV1} ... _{DVn} ) übereinstimmen, wobei die Softwarepaketdaten (SWPD) und die Konfigurationsdaten (CFGD) identifiziert (idf) werden, wenn eine Übereinstimmung bestimmt wird, wobei anderenfalls im Falle einer Nichtübereinstimmung und zum weiteren Identifizieren (idf) der Softwarepaketdaten (SWPD) und der Konfigurationsdaten (CFGD) ein heuristischer Ansatz zum Bestimmen einer Teilübereinstimmung verwendet wird,
**b**) Flashen (fls) oder Hochladen (upl) der identifizierten Softwarepaketdaten (SWPD) und Konfigurationsdaten (CFGD) auf die Vorrichtung (DV_{c}), um sie für die Inbetriebnahme (CMS) mit dem System (SY_{t,cp}) und dessen systeminternen Betrieb zu konfigurieren.

8. Computerimplementiertes Werkzeug (CIT) nach Anspruch 7, wobei die inbetriebnahmebezogenen, konfigurationsrelevanten Informationen (IF_{CMS, cfg}) bezüglich der Vorrichtung (DV_{c}) mindestens eines beinhalten von entweder (OPT-1)
a) einem Vorrichtungstyp, einem Vorrichtungsmodell und einer Vorrichtungsfähigkeit,
b) vorkonfigurierten oder mit einem Sensor gemessenen Vorrichtungsstandortinformationen und
c) Vorrichtungskonnektivitätsinformationen, z. B. MAC-Adresse, verwendete Netzschnittstellen oder verbundene Netzwerke und Gadgets
oder (OPT-2)
a) einem Vorrichtungstyp, einem Vorrichtungsmodell und einer Vorrichtungsfähigkeit,
b) vorkonfigurierten oder mit einem Sensor gemessenen Vorrichtungsstandortinformationen,
c) Vorrichtungskonnektivitätsinformationen, z. B. MAC-Adresse, verwendete Netzschnittstellen oder verbundene Netzwerke und Gadgets und
d) einer eingebauten Kennung der Vorrichtung, z. B. einer Seriennummer gemäß einem Herstellungsprozess, und/oder einer mit einer "mobilen APP" erstellten Identifizierungsmarkierung.

9. Computerimplementiertes Werkzeug (CIT) nach Anspruch 7 oder 8, wobei die Entwurfsdaten (EGD_{DV1} ... _{Dvn}) bezüglich jeder Vorrichtung des Vorrichtungssatzes (DV₁ ... DVₙ) mindestens eines beinhalten von entweder (OPT-1)
e) einem Vorrichtungstyp, einem Vorrichtungsmodell und einer Vorrichtungsfähigkeit,
f) vorkonfigurierten oder mit einem Sensor gemessenen Vorrichtungsstandortinformationen,
g) Vorrichtungskonnektivitätsinformationen, z. B. MAC-Adresse, verwendete Netzschnittstellen oder verbundene Netzwerke und Gadgets,
h) einem Vorrichtungsstandort,
i) einer ID des der Vorrichtung zugewiesenen Softwarepakets und
j) Verbindungen zu dem System (SY_{t,cp}) oder zu anderen Vorrichtungen innerhalb oder außerhalb des Systems (SY_{t,cp}) oder (OPT-2)
e) einem Vorrichtungstyp, einem Vorrichtungsmodell und einer Vorrichtungsfähigkeit,
f) vorkonfigurierten oder mit einem Sensor gemessenen Vorrichtungsstandortinformationen,
g) Vorrichtungskonnektivitätsinformationen, z. B. MAC-Adresse, verwendete Netzschnittstellen oder verbundene Netzwerke und Gadgets,
h) einem Vorrichtungsstandort,
i) einer ID des der Vorrichtung zugewiesenen Softwarepakets,
j) Verbindungen zu dem System (SY_{t,cp}) oder zu anderen Vorrichtungen innerhalb oder außerhalb des Systems (SY_{t,cp}) und
k) einer vorkonfigurierten Kennung der Vorrichtung, die der eingebauten Kennung von d) in Anspruch 2 entspricht, und/oder einer mit einer "mobilen APP" erstellten Identifizierungsmarkierung.

10. Computerimplementiertes Werkzeug (CIT) nach Anspruch 8 und 9, wobei das Programmmodul (PGM) und der Prozessor (PRC) derart ausgebildet sind, dass
die Identifizierung (idf) der Softwarepaketdaten (SWPD) und der Konfigurationsdaten (CFGD) durch Bestimmen für jede Vorrichtung des Vorrichtungssatzes (DV₁ ... DVₙ) Schritt für Schritt und basierend auf dem Übereinstimmungsalgorithmus (MAG) schrittweise durchgeführt wird, wobei die folgenden Schritte verwendet werden, (**i**) in den Fällen "entweder (OPT-1)" in Anspruch 2 und 3 ein erster Schritt <1>, ein zweiter Schritt <2> und schließlich ein dritter Schritt <3> **oder** (**ii**) in den Fällen "oder (OPT-2)" in Anspruch 2 und 3 ein erster Schritt <1>, ein zweiter Schritt <2>, ein dritter Schritt <3>, ein vierter Schritt <4> und schließlich ein fünfter Schritt <5>:
(**i**)
<1> Berücksichtigen von jeweils nur der Vorrichtung, bei der die Vorrichtungsstandortinformationen mit den Vorrichtungsstandortinformationen der Vorrichtung (DV_{c}) übereinstimmen, in den Entwurfsdaten (EGD_{DV1} ... _{Dvn}) für den Vorrichtungssatz (DV₁ ... DVₙ), wobei der zweite Schritt <2> durchgeführt wird, wenn eine Übereinstimmung festgestellt wird, wobei anderenfalls im Falle einer Nichtübereinstimmung und zum weiteren Identifizieren der Softwarepaketdaten (SWPD) und der Konfigurationsdaten (CFGD) ein heuristischer Ansatz zum Bestimmen einer Teilübereinstimmung verwendet wird,
<2> Berücksichtigen von jeweils nur der Vorrichtung, bei der der Vorrichtungstyp und das Vorrichtungsmodell mit dem Vorrichtungstyp und dem Vorrichtungsmodell der Vorrichtung (DV_{c}) übereinstimmen, in den Entwurfsdaten (EGD_{DV1} ... _{Dvn}) für die Vorrichtungen aus dem ersten Schritt <1>, wobei der dritte Schritt <3> durchgeführt wird, wenn eine Übereinstimmung festgestellt wird, wobei anderenfalls im Falle einer Nichtübereinstimmung und zum weiteren Identifizieren der Softwarepaketdaten (SWPD) und der Konfigurationsdaten (CFGD) ein heuristischer Ansatz zum Bestimmen einer Teilübereinstimmung verwendet wird, und schließlich <3> Berücksichtigen von jeweils nur der Vorrichtung, bei der die Vorrichtungskonnektivitätsinformationen mit den Vorrichtungskonnektivitätsinformationen der Vorrichtung (DV_{c}) übereinstimmen, in den Entwurfsdaten (EGD_{DV1} ... _{Dvn}) für die Vorrichtungen aus dem zweiten Schritt <2>, wobei die Softwarepaketdaten (SWPD) und die Konfigurationsdaten (CFGD) identifiziert werden, wenn eine Übereinstimmung festgestellt wird, wobei anderenfalls im Falle einer Nichtübereinstimmung und zum weiteren Identifizieren der Softwarepaketdaten (SWPD) und der Konfigurationsdaten (CFGD) ein heuristischer Ansatz zum Bestimmen einer Teilübereinstimmung verwendet wird, **oder**
(**ii**)
<1> Berücksichtigen von jeweils nur der Vorrichtung, bei der die Vorrichtungsstandortinformationen mit den Vorrichtungsstandortinformationen der Vorrichtung (DV_{c}) übereinstimmen, in den Entwurfsdaten (EGD_{DV1} ... _{Dvn}) für den Vorrichtungssatz (DV₁ ... DVₙ), wobei der zweite Schritt <2> durchgeführt wird, wenn eine Übereinstimmung festgestellt wird, wobei anderenfalls im Falle einer Nichtübereinstimmung und zum weiteren Identifizieren der Softwarepaketdaten (SWPD) und der Konfigurationsdaten (CFGD) ein heuristischer Ansatz zum Bestimmen einer Teilübereinstimmung verwendet wird,
<2> Berücksichtigen von jeweils nur der Vorrichtung, bei der der Vorrichtungstyp und das Vorrichtungsmodell mit dem Vorrichtungstyp und dem Vorrichtungsmodell der Vorrichtung (DV_{c}) übereinstimmen, in den Entwurfsdaten (EGD_{DV1} ... _{Dvn}) für die Vorrichtungen aus dem ersten Schritt <1>, wobei der dritte Schritt <3> durchgeführt wird, wenn eine Übereinstimmung festgestellt wird, wobei anderenfalls im Falle einer Nichtübereinstimmung und zum weiteren Identifizieren der Softwarepaketdaten (SWPD) und der Konfigurationsdaten (CFGD) ein heuristischer Ansatz zum Bestimmen einer Teilübereinstimmung verwendet wird,
<3> Berücksichtigen von jeweils nur der Vorrichtung, bei der die Vorrichtungskonnektivitätsinformationen mit den Vorrichtungskonnektivitätsinformationen der Vorrichtung (DV_{c}) übereinstimmen, in den Entwurfsdaten (EGD_{DV1} ... _{Dvn}) für die Vorrichtungen aus dem zweiten Schritt <2>, wobei der vierte Schritt <4> durchgeführt wird, wenn eine Übereinstimmung festgestellt wird, wobei anderenfalls im Falle einer Nichtübereinstimmung und zum weiteren Identifizieren der Softwarepaketdaten (SWPD) und der Konfigurationsdaten (CFGD) ein heuristischer Ansatz zum Bestimmen einer Teilübereinstimmung verwendet wird,
<4> Berücksichtigen von jeweils nur der Vorrichtung mit der gleichen Identifizierungsmarkierung wie die Identifizierungsmarkierung der Vorrichtung (DV_{c}), wenn die mit einer "mobilen APP" erstellte Identifizierungsmarkierung aus Entwurfsdaten (EGD_{DV1} ... _{Dvn}) für Vorrichtungen in dem dritten Schritt <3> erstellt wurde, wobei anderenfalls alle die Vorrichtungen aus dem dritten Schritt <3> berücksichtigt werden und der fünfte Schritt <5> durchgeführt wird, und schließlich
<5> Identifizieren der Softwarepaketdaten (SWPD) und der Konfigurationsdaten (CFGD), wenn der vierte Schritt <4> eine einzige Vorrichtung der Vorrichtungen des dritten Schritts <3> ergibt.

11. Computerimplementiertes Werkzeug (CIT) nach einem der Ansprüche 7 bis 10, wobei das Programmmodul (PGM) und der Prozessor (PRC) derart ausgebildet sind, dass
im Falle der Nichtübereinstimmung aufgrund von Inkonsistenzen, die durch die Tatsache verursacht werden, dass (i) das System (SY_{t,cp}) teilweise anders gebaut ist als entworfen gemäß dem digitalen System-Vorrichtungs-Zwilling (DSDT) und dadurch gezeigt oder (**ii**) die inbetriebnahmebezogenen, konfigurationsrelevanten Informationen (IF_{CMS,cfg}) der Vorrichtung (DV_{c}) unvollständig oder falsch sind, der heuristische Ansatz an die Inkonsistenzen angepasst wird, um eine angemessene Übereinstimmung zu finden, wobei anderenfalls, wenn keine angemessene Übereinstimmung gefunden werden kann, ein Lösungsingenieur hinzugezogen wird, um die Vorrichtung (DV_{c}) in Betrieb zu nehmen.

12. Computerimplementiertes Werkzeug (CIT) nach Anspruch 8 und 11, wobei das Programmmodul (PGM) und der Prozessor (PRC) derart ausgebildet sind, dass
- wenn die Inkonsistenz gemäß den Informationen (IF_{CMS,cfg}) der Vorrichtung (DV_{c}), beinhaltend die Vorrichtungsstandortinformationen, einen falschen Standort der Vorrichtung (DV_{c}) zeigt, eine Vorrichtung des Vorrichtungssatzes (DV₁ ... DVₙ), die benachbart zu dem falschen Standort ist, für den heuristischen Ansatz herangezogen wird, oder
- wenn die Inkonsistenz gemäß den Informationen (IF_{CMS,cfg}) der Vorrichtung (DV_{c}), beinhaltend die Vorrichtungstypinformationen, einen falschen Typ der Vorrichtung (DV_{c}) zeigt, eine Vorrichtung des Vorrichtungssatzes (DV₁ ... DVₙ), die bessere Vorrichtungsfähigkeiten aufweist, für den heuristischen Ansatz herangezogen wird, oder
- wenn die Inkonsistenz gemäß den Informationen (IF_{CMS,cfg}) der Vorrichtung (DV_{c}), beinhaltend die Vorrichtungskonnektivitätsinformationen, eine falsche Konnektivität der Vorrichtung (DV_{c}) in dem System (SY_{t,cp}) zeigt, eine Vorrichtung des Vorrichtungssatzes (DV₁ ... DVₙ), die eine bessere Vorrichtungskonnektivität aufweist, für den heuristischen Ansatz herangezogen wird.

13. Vorrichtung (CPT) zum Konfigurieren (cfg) einer in Betrieb zu nehmenden Vorrichtung (DV_{c}) eines Vorrichtungssatzes (DV₁ ... DVₙ) zur Inbetriebnahme (CMS) mit einem technischen oder cyber-physikalischen System (SY_{t,cp}), beinhaltend eine Steuereinheit (CU), die für Steuerungsaufgaben in der Vorrichtung (CPT) zuständig ist, wobei zum Durchführen des Verfahrens nach einem der Ansprüche 1 bis 6 ein computerimplementiertes Werkzeug (CIT) nach einem der Ansprüche 7 bis 12 in die Steuereinheit (CU) hochladbar ist.

14. Konfigurationsanordnung (CGA) zum Konfigurieren (cfg) einer in Betrieb zu nehmenden Vorrichtung (DV_{c}) eines Vorrichtungssatzes (DV₁ ... DVₙ) zur Inbetriebnahme (CMS) mit einem technischen oder cyber-physikalischen System (SY_{t,cp}), wobei eine Vorrichtung (CPT) nach Anspruch 13 mit dem System (SY_{t,cp}) verbunden ist, ein Software-Repository (SWR) zum Speichern von Softwarepaketdaten (SWPD) mit der Vorrichtung (CPT) verbunden ist, ein Entwicklungssteuersystem (DCS) mit der Vorrichtung (CPT) verbunden ist und ein digitaler System-Vorrichtungs-Zwilling (DSDT) zum Speichern von Vorrichtungskonfigurationsdaten des Vorrichtungssatzes (DV₁ ... DVₙ) mit dem Entwicklungssteuersystem (DCS) verbunden ist, die eine Funktionseinheit derart bilden, dass das Verfahren nach einem der Ansprüche 1 bis 6 durchgeführt wird.

## Revendications

1. Procédé pour la configuration (cfg) d'un dispositif (DV_{c}) devant être mis en service d'un ensemble de dispositifs (DV₁...DVₙ) pour une mise en service (CMS) avec un système technique ou cyber-physique (SY_{t,cp}), par lequel des données de progiciel (SWPD), en particulier qui sont téléchargées à partir d'un référentiel de logiciels (SWR) stockant des progiciels (SWP) et des données de configuration (CFGD) pour configurer le dispositif (DV_{c}) qui sont enregistrées (rgs) auprès du système (SY_{t,cp}) ou installées (isl) dans et enregistrées (rgs) auprès de celui-ci, sont utilisées pour la mise en service (CMS) avec le système (SY_{t,cp}) et son exploitation dans le système, dans lequel
a) le déploiement automatique (dpl) des données de progiciel (SWPD) et des données de configuration (CFGD) par
a1) la collecte (clt) d'informations (IF_{CMS,cfg}) relatives à la mise en service et pertinentes pour la configuration du dispositif (DV_{c}) à partir du système (SY_{t,cp}) ou du dispositif (DV_{c}) devant être mis en service,
a2) l'extraction (ftc) de données d'ingénierie (EGD_{DV1...DVn}) pour l'ensemble de dispositifs (DV₁...DVₙ) à partir d'un système de commande de développement (DCS) ayant accès à des données de dispositif utilisables pour la configuration fournies par un jumeau numérique de dispositif de système (DSDT),
a3) l'identification (idf) des données de progiciel (SWPD) et des données de configuration (CFGD) parmi les informations (IF_{CMS,cfg}) collectées et les données d'ingénierie (EGD_{DV1...DVn}) extraites pour l'ensemble de dispositifs (DV₁...DVₙ) par la détermination, par étapes, pour chaque dispositif de l'ensemble de dispositifs (DV₁...DVₙ), et sur la base d'un algorithme de concordance (MAG), de si les informations (IF_{CMS,cfg}) collectées concordent chacune avec les données d'ingénierie (EGD_{DV1...DVn}) extraites correspondantes, dans lequel les données de progiciel (SWPD) et les données de configuration (CFGD) sont identifiées (idf) lorsqu'une concordance est déterminée, sinon, dans le cas d'une discordance et pour tout de même identifier (idf) les données de progiciel (SWPD) et les données de configuration (CFGD), une approche heuristique est utilisée pour déterminer une concordance partielle,
b) le flashage ou le téléversement des données de progiciel (SWPD) et données de configuration (CFGD) identifiées sur le dispositif (DV_{c}) pour le configurer pour la mise en service (CMS) avec le système (SY_{t,cp}) et son exploitation dans le système.

2. Procédé selon la revendication 1, dans lequel les informations (IF_{CMS,cfg}) relatives à la mise en service et pertinentes pour la configuration incluent, en ce qui concerne le dispositif (DV_{c}), au moins l'un parmi soit (OPT-1)
a) un type de dispositif, un modèle de dispositif et une capacité de dispositif,
b) des informations d'emplacement de dispositif préconfigurées ou mesurées par capteur et
c) des informations de connectivité de dispositif, par ex. l'adresse MAC, des interfaces réseau utilisées ou des réseaux et gadgets connectés.
soit (OPT-2)
a) un type de dispositif, un modèle de dispositif et une capacité de dispositif,
b) des informations d'emplacement de dispositif préconfigurées ou mesurées par capteur,
c) des informations de connectivité de dispositif, par ex. l'adresse MAC, des interfaces réseau utilisées ou des réseaux et gadgets connectés, et
d) un identifiant intégré du dispositif, par ex. un numéro de série selon un processus de fabrication, et/ou un marqueur d'identification créé par une « application mobile ».

3. Procédé selon la revendication 2, dans lequel les données d'ingénierie (EGD_{DV1...DVn}) incluent, en ce qui concerne chaque dispositif de l'ensemble de dispositifs (DV₁...DVₙ), au moins l'un parmi soit (OPT-1)
e) un type de dispositif, un modèle de dispositif et une capacité de dispositif,
f) des informations d'emplacement de dispositif préconfigurées ou mesurées par capteur,
g) des informations de connectivité de dispositif, par ex. l'adresse MAC, des interfaces réseau utilisées ou des réseaux et gadgets connectés,
h) un emplacement du dispositif,
i) un ID d'un progiciel attribué au dispositif et
j) des connexions au système (SY_{t,cp}) ou à d'autres dispositifs à l'intérieur ou à l'extérieur du système (SY_{t,cp}).
soit (OPT-2)
e) un type de dispositif, un modèle de dispositif et une capacité de dispositif,
f) des informations d'emplacement de dispositif préconfigurées ou mesurées par capteur,
g) des informations de connectivité de dispositif, par ex. l'adresse MAC, des interfaces réseau utilisées ou des réseaux et gadgets connectés,
h) un emplacement du dispositif,
i) un ID d'un progiciel attribué au dispositif,
j) des connexions au système (SY_{t,cp}) ou à d'autres dispositifs à l'intérieur ou à l'extérieur du système (SY_{t,cp}) et
k) un identifiant préconfiguré du dispositif correspondant à l'identifiant intégré de d) à la revendication 2 et/ou un marqueur d'identification créé par une « application mobile ».

4. Procédé selon les revendications 2 et 3, dans lequel l'identification (idf) des données de progiciel (SWPD) et des données de configuration (CFGD) par la détermination, par étapes, pour chaque dispositif de l'ensemble de dispositifs (DV₁...DVₙ), et sur la base de l'algorithme de concordance (MAG), est ainsi effectuée étape par étape à l'aide des étapes suivantes, (i) dans les cas « soit (OPT-1) » des revendications 2 et 3, une première étape <1>, une deuxième étape <2> et enfin une troisième étape <3> ou (ii) dans les cas « soit (OPT-2) » des revendications 2 et 3, une première étape <1>, une deuxième étape <2>, une troisième étape <3>, une quatrième étape <4> et enfin une cinquième étape <5> :
(i)
<1> La prise en compte, à partir de données d'ingénierie (EGD_{DV1...DVn}) pour l'ensemble de dispositifs (DV₁...DVₙ), de chacun de seulement ce dispositif où les informations d'emplacement de dispositif concordent avec les informations d'emplacement de dispositif du dispositif (DV_{c}), dans lequel la deuxième étape
<2> est effectuée lorsqu'une concordance est déterminée, sinon, dans le cas d'une discordance et pour tout de même identifier les données de progiciel (SWPD) et les données de configuration (CFGD), l'approche heuristique est utilisée pour déterminer une concordance partielle,
<2> La prise en compte, à partir de données d'ingénierie (EGD_{DV1...DVn}) pour les dispositifs à la première étape <1>, de chacun de seulement ce dispositif où le type de dispositif et le modèle de dispositif concordent avec le type de dispositif et le modèle de dispositif du dispositif (DV_{c}), dans lequel la troisième étape <3> est effectuée lorsqu'une concordance est déterminée, sinon, dans le cas d'une discordance et pour tout de même identifier les données de progiciel (SWPD) et les données de configuration (CFGD), l'approche heuristique est utilisée pour déterminer une concordance partielle, et enfin
<3> La prise en compte, à partir de données d'ingénierie (EGD_{DV1...DVn}) pour les dispositifs à la deuxième étape <2>, de chacun de seulement ce dispositif où les informations de connectivité de dispositif concordent avec les informations de connectivité de dispositif du dispositif (DV_{c}), dans lequel les données de progiciel (SWPD) et les données de configuration (CFGD) sont identifiées lorsqu'une concordance est déterminée, sinon, dans le cas d'une discordance et pour tout de même identifier les données de progiciel (SWPD) et les données de configuration (CFGD), l'approche heuristique est utilisée pour déterminer une concordance partielle, ou
(ii)
<1> La prise en compte, à partir de données d'ingénierie (EGD_{DV1...DVn}) pour l'ensemble de dispositifs (DV₁...DVₙ), de chacun de seulement ce dispositif où les informations d'emplacement de dispositif concordent avec les informations d'emplacement de dispositif du dispositif (DV_{c}), dans lequel la deuxième étape
<2> est effectuée lorsqu'une concordance est déterminée, sinon, dans le cas d'une discordance et pour tout de même identifier les données de progiciel (SWPD) et les données de configuration (CFGD), l'approche heuristique est utilisée pour déterminer une concordance partielle,
<2> La prise en compte, à partir de données d'ingénierie (EGD_{DV1...DVn}) pour les dispositifs à la première étape <1>, de chacun de seulement ce dispositif où le type de dispositif et le modèle de dispositif concordent avec le type de dispositif et le modèle de dispositif du dispositif (DV_{c}), dans lequel la troisième étape <3> est effectuée lorsqu'une concordance est déterminée, sinon, dans le cas d'une discordance et pour tout de même identifier les données de progiciel (SWPD) et les données de configuration (CFGD), l'approche heuristique est utilisée pour déterminer une concordance partielle,
<3> La prise en compte, à partir de données d'ingénierie (EGD_{DV1...DVn}) pour les dispositifs à la deuxième étape <2>, de chacun de seulement ce dispositif où les informations de connectivité de dispositif concordent avec les informations de connectivité de dispositif du dispositif (DV_{c}), dans lequel la quatrième étape <4> est effectuée lorsqu'une concordance est déterminée, sinon, dans le cas d'une discordance et pour tout de même identifier les données de progiciel (SWPD) et les données de configuration (CFGD), l'approche heuristique est utilisée pour déterminer une concordance partielle,
<4> La prise en compte, lorsque le marqueur d'identification créé par une « application mobile » est créé à partir de données d'ingénierie (EGD_{DV1...DVn}) pour les dispositifs à la troisième étape <3>, de chacun de seulement ce dispositif ayant le même marqueur d'identification que le marqueur d'identification du dispositif (DV_{c}), sinon, tous les dispositifs de la troisième étape <3> sont pris en compte et la cinquième étape <5> est effectuée, et enfin
<5> Si la quatrième étape <4> résulte en un unique dispositif des dispositifs à la troisième étape <3>, les données de progiciel (SWPD) et les données de configuration (CFGD) sont identifiées.

5. Procédé selon l'une des revendications 1 à 4, dans lequel dans le cas de la discordance due à des incohérences provoquées par le fait que le système (SY_{t,cp}) est construit partiellement différemment de celui conçu selon et représenté par le jumeau numérique de dispositif de système (DSDT) ou que les informations (IF_{CMS,cfg}) relatives à la mise en service et pertinentes pour la configuration du dispositif (DV_{c}) sont incomplètes ou erronées, l'approche heuristique est adaptée aux incohérences pour trouver une concordance appropriée, sinon, si aucune concordance appropriée ne peut être trouvée, un ingénieur de résolution qui est un ingénieur de résolution est impliqué pour mettre en service le dispositif (DV_{c}).

6. Procédé selon les revendications 2 et 5, dans lequel
- si l'incohérence selon les informations (IF_{CMS,cfg}) du dispositif (DV_{c}) incluant les informations d'emplacement de dispositif présente un emplacement erroné du dispositif (DV_{c}), un dispositif de l'ensemble de dispositifs (DV₁...DVₙ) à côté de l'emplacement erroné est pris par l'approche heuristique, ou
- si l'incohérence selon les informations (IF_{CMS,cfg}) du dispositif (DV_{c}) incluant les informations de type de dispositif présente un type erroné du dispositif (DV_{c}), un dispositif de l'ensemble de dispositifs (DV₁...DVₙ) ayant de meilleures capacités de dispositif est pris par l'approche heuristique, ou
- si l'incohérence selon les informations (IF_{CMS,cfg}) du dispositif (DV_{c}) incluant les informations de connectivité de dispositif présente une connectivité erronée du dispositif (DV_{c}) dans le système (SY_{t,cp}), un dispositif de l'ensemble de dispositifs (DV₁...DVₙ) ayant une meilleure connectivité est pris par l'approche heuristique.

7. Outil mis en œuvre par ordinateur (CIT), en particulier un produit programme d'ordinateur (CPP) conçu comme une application, pour la configuration (cfg) d'un dispositif (DV_{c}) devant être mis en service d'un ensemble de dispositifs (DV₁...DVₙ) pour une mise en service (CMS) avec un système technique ou cyber-physique (SY_{t,cp}), par lequel des données de progiciel (SWPD), en particulier qui sont téléchargées à partir d'un référentiel de logiciels (SWR) stockant des progiciels (SWP) et des données de configuration (CFGD) pour configurer le dispositif (DV_{c}) qui sont enregistrées (rgs) auprès du système (SY_{t,cp}) ou installées (isl) dans et enregistrées (rgs) auprès de celui-ci, sont utilisées pour la mise en service (CMS) avec le système (SY_{t,cp}) et son exploitation dans le système, dans lequel un support de stockage (STM) non transitoire lisible par processeur ayant des instructions de programme lisibles par processeur d'un module de programme (PGM) pour la configuration (cfg) du dispositif (DV_{c}) stockées dans le support de stockage (STM) non transitoire lisible par processeur et un processeur (PRC) connecté au support de stockage (STM) exécutant les instructions de programme lisibles par processeur du module de programme (PGM) pour la configuration (cfg) du dispositif (DV_{c}), dans lequel le module de programme (PGM) et le processeur (PRC) sont conçus de sorte que
a) les données de progiciel (SWPD) et les données de configuration (CFGD) sont déployées (dpl) automatiquement par
a1) la collecte (clt) d'informations (IF_{CMS,cfg}) relatives à la mise en service et pertinentes pour la configuration du dispositif (DV_{c}) à partir du système (SY_{t,cp}) ou du dispositif (DV_{c}) devant être mis en service,
a2) l'extraction (ftc) de données d'ingénierie (EGD_{DV1...DVn}) pour l'ensemble de dispositifs (DV₁...DVₙ) à partir d'un système de commande de développement (DCS) ayant accès à des données de dispositif utilisables pour la configuration fournies par un jumeau numérique de dispositif de système (DSDT),
a3) l'identification (idf) des données de progiciel (SWPD) et des données de configuration (CFGD) parmi les informations (IF_{CMS,cfg}) collectées et les données d'ingénierie (EGD_{DV1...DVn}) extraites pour l'ensemble de dispositifs (DV₁...DVₙ) par la détermination, par étapes, pour chaque dispositif de l'ensemble de dispositifs (DV₁...DVₙ), et sur la base d'un algorithme de concordance (MAG), de si les informations (IF_{CMS,cfg}) collectées concordent chacune avec les données d'ingénierie (EGD_{DV1...DVn}) extraites correspondantes, dans lequel les données de progiciel (SWPD) et les données de configuration (CFGD) sont identifiées (idf) lorsqu'une concordance est déterminée, sinon, dans le cas d'une discordance et pour tout de même identifier (idf) les données de progiciel (SWPD) et les données de configuration (CFGD), une approche heuristique est utilisée pour déterminer une concordance partielle,
b) le flashage (fls) ou le téléversement (upl) des données de progiciel (SWPD) et données de configuration (CFGD) identifiées sur le dispositif (DV_{c}) pour le configurer pour la mise en service (CMS) avec le système (SY_{t,cp}) et son exploitation dans le système.

8. Outil mis en œuvre par ordinateur (CIT) selon la revendication 7, dans lequel les informations (IF_{CMS,cfg}) relatives à la mise en service et pertinentes pour la configuration incluent en ce qui concerne le dispositif (DV_{c}) au moins l'un parmi soit (OPT-1)
a) un type de dispositif, un modèle de dispositif et une capacité de dispositif,
b) des informations d'emplacement de dispositif préconfigurées ou mesurées par capteur et
c) des informations de connectivité de dispositif, par ex. l'adresse MAC, des interfaces réseau utilisées ou des réseaux et gadgets connectés.
soit (OPT-2)
a) un type de dispositif, un modèle de dispositif et une capacité de dispositif,
b) des informations d'emplacement de dispositif préconfigurées ou mesurées par capteur,
c) des informations de connectivité de dispositif, par ex. l'adresse MAC, des interfaces réseau utilisées ou des réseaux et gadgets connectés, et
d) un identifiant intégré du dispositif, par ex. un numéro de série selon un processus de fabrication, et/ou un marqueur d'identification créé par une « application mobile ».

9. Outil mis en œuvre par ordinateur (CIT) selon la revendication 7 ou 8, dans lequel les données d'ingénierie (EGD_{DV1...DVn}) incluent en ce qui concerne chaque dispositif de l'ensemble de dispositifs (DV₁...DVₙ) au moins l'un parmi soit (OPT-1)
e) un type de dispositif, un modèle de dispositif et une capacité de dispositif,
f) des informations d'emplacement de dispositif préconfigurées ou mesurées par capteur,
g) des informations de connectivité de dispositif, par ex. l'adresse MAC, des interfaces réseau utilisées ou des réseaux et gadgets connectés,
h) un emplacement du dispositif,
i) un ID d'un progiciel attribué au dispositif et
j) des connexions au système (SY_{t,cp}) ou à d'autres dispositifs à l'intérieur ou à l'extérieur du système (SY_{t,cp}).
soit (OPT-2)
e) un type de dispositif, un modèle de dispositif et une capacité de dispositif,
f) des informations d'emplacement de dispositif préconfigurées ou mesurées par capteur,
g) des informations de connectivité de dispositif, par ex. l'adresse MAC, des interfaces réseau utilisées ou des réseaux et gadgets connectés,
h) un emplacement du dispositif,
i) un ID d'un progiciel attribué au dispositif,
j) des connexions au système (SY_{t,cp}) ou à d'autres dispositifs à l'intérieur ou à l'extérieur du système (SY_{t,cp}) et
k) un identifiant préconfiguré du dispositif correspondant à l'identifiant intégré de d) à la revendication 2 et/ou un marqueur d'identification créé par une « application mobile ».

10. Outil mis en œuvre par ordinateur (CIT) selon les revendications 8 et 9, dans lequel le module de programme (PGM) et le processeur (PRC) sont conçus de sorte que l'identification (idf) des données de progiciel (SWPD) et des données de configuration (CFGD) par la détermination, par étapes, pour chaque dispositif de l'ensemble de dispositifs (DV₁...DVₙ), et sur la base de l'algorithme de concordance (MAG), est ainsi effectuée étape par étape à l'aide des étapes suivantes, (i) dans les cas « soit (OPT-1) » des revendications 2 et 3, une première étape <1>, une deuxième étape <2> et enfin une troisième étape <3> ou (ii) dans les cas « soit (OPT-2) » des revendications 2 et 3, une première étape <1>, une deuxième étape <2>, une troisième étape <3>, une quatrième étape <4> et enfin une cinquième étape <5> :
(i)
<1> La prise en compte, à partir de données d'ingénierie (EGD_{DV1...DVn}) pour l'ensemble de dispositifs (DV₁...DVₙ), de chacun de seulement ce dispositif où les informations d'emplacement de dispositif concordent avec les informations d'emplacement de dispositif du dispositif (DV_{g}), dans lequel la deuxième étape
<2> est effectuée lorsqu'une concordance est déterminée, sinon, dans le cas d'une discordance et pour tout de même identifier les données de progiciel (SWPD) et les données de configuration (CFGD), l'approche heuristique est utilisée pour déterminer une concordance partielle,
<2> La prise en compte, à partir de données d'ingénierie (EGD_{DV1...DVn}) pour les dispositifs à la première étape <1>, de chacun de seulement ce dispositif où le type de dispositif et le modèle de dispositif concordent avec le type de dispositif et le modèle de dispositif du dispositif (DV_{g}), dans lequel la troisième étape <3> est effectuée lorsqu'une concordance est déterminée, sinon, dans le cas d'une discordance et pour tout de même identifier les données de progiciel (SWPD) et les données de configuration (CFGD), l'approche heuristique est utilisée pour déterminer une concordance partielle, et enfin
<3> La prise en compte, à partir de données d'ingénierie (EGD_{DV1...DVn}) pour les dispositifs à la deuxième étape <2>, de chacun de seulement ce dispositif où les informations de connectivité de dispositif concordent avec les informations de connectivité de dispositif du dispositif (DV_{g}), dans lequel les données de progiciel (SWPD) et les données de configuration (CFGD) sont identifiées lorsqu'une concordance est déterminée, sinon, dans le cas d'une discordance et pour tout de même identifier les données de progiciel (SWPD) et les données de configuration (CFGD), l'approche heuristique est utilisée pour déterminer une concordance partielle,
ou (ii)
<1> La prise en compte, à partir de données d'ingénierie (EGD_{DV1...DVn}) pour l'ensemble de dispositifs (DV₁...DVₙ), de chacun de seulement ce dispositif où les informations d'emplacement de dispositif concordent avec les informations d'emplacement de dispositif du dispositif (DV_{g}), dans lequel la deuxième étape
<2> est effectuée lorsqu'une concordance est déterminée, sinon, dans le cas d'une discordance et pour tout de même identifier les données de progiciel (SWPD) et les données de configuration (CFGD), l'approche heuristique est utilisée pour déterminer une concordance partielle,
<2> Prendre en compte, à partir de données d'ingénierie (EGD_{DV1...DVn}) pour les dispositifs à la première étape <1>, chacun de seulement ce dispositif où le type de dispositif et le modèle de dispositif concordent avec le type de dispositif et le modèle de dispositif du dispositif (DV_{c}), dans lequel la troisième étape
<3> est effectuée lorsqu'une concordance est déterminée, sinon, dans le cas d'une discordance et pour tout de même identifier les données de progiciel (SWPD) et les données de configuration (CFGD), l'approche heuristique est utilisée pour déterminer une concordance partielle,
<3> La prise en compte, à partir de données d'ingénierie (EGD_{DV1...DVn}) pour les dispositifs à la deuxième étape <2>, de chacun de seulement ce dispositif où les informations de connectivité de dispositif concordent avec les informations de connectivité de dispositif du dispositif (DV_{g}), dans lequel la quatrième étape <4> est effectuée lorsqu'une concordance est déterminée, sinon, dans le cas d'une discordance et pour tout de même identifier les données de progiciel (SWPD) et les données de configuration (CFGD), l'approche heuristique est utilisée pour déterminer une concordance partielle,
<4> La prise en compte, lorsque le marqueur d'identification créé par une « application mobile » est créé à partir de données d'ingénierie (EGD_{DV1...DVn}) pour les dispositifs à la troisième étape <3>, de chacun de seulement ce dispositif ayant le même marqueur d'identification que le marqueur d'identification du dispositif (DV_{c}), sinon, tous les dispositifs de la troisième étape <3> sont pris en compte et la cinquième étape <5> est effectuée, et enfin
<5> Si la quatrième étape <4> résulte en un unique dispositif des dispositifs à la troisième étape <3>, les données de progiciel (SWPD) et les données de configuration (CFGD) sont identifiées.

11. Outil mis en œuvre par ordinateur (CIT) selon l'une des revendications 7 à 10, dans lequel
le module de programme (PGM) et le processeur (PRC) sont conçus de sorte que
dans le cas de la discordance due à des incohérences provoquées par le fait que (i) le système (SY_{t,cp}) est construit partiellement différemment de celui conçu selon et représenté par le jumeau numérique de dispositif de système (DSDT) ou (ii) les informations (IF_{CMS,cfg}) relatives à la mise en service et pertinentes pour la configuration du dispositif (DV_{c}) sont incomplètes ou erronées, l'approche heuristique est adaptée aux incohérences pour trouver une concordance appropriée, sinon, si aucune concordance appropriée ne peut être trouvée, un ingénieur de résolution qui est un ingénieur de résolution est impliqué pour mettre en service le dispositif (DV_{c}).

12. Outil mis en œuvre par ordinateur (CIT) selon la revendication 8 et 11, dans lequel le module de programme (PGM) et le processeur (PRC) sont conçus de sorte que
- si l'incohérence selon les informations (IF_{CMS,cfg}) du dispositif (DV_{c}) incluant les informations d'emplacement de dispositif présente un emplacement erroné du dispositif (DV_{c}), un dispositif de l'ensemble de dispositifs (DV₁...DVₙ) à côté de l'emplacement erroné est pris par l'approche heuristique, ou
- si l'incohérence selon les informations (IF_{CMS,cfg}) du dispositif (DV_{c}) incluant les informations de type de dispositif présente un type erroné du dispositif (DV_{c}), un dispositif de l'ensemble de dispositifs (DV₁...DVₙ) ayant de meilleures capacités de dispositif est pris par l'approche heuristique, ou
- si l'incohérence selon les informations (IF_{CMS,cfg}) du dispositif (DV_{c}) incluant les informations de connectivité de dispositif présente une connectivité erronée du dispositif (DV_{c}) dans le système (SY_{t,cp}), un dispositif de l'ensemble de dispositifs (DV₁...DVₙ) ayant une meilleure connectivité est pris par l'approche heuristique.

13. Engin (CPT) pour la configuration (cfg) d'un dispositif (DV_{c}) devant être mis en service d'un ensemble de dispositifs (DV₁...DVₙ) pour une mise en service (CMS) avec un système technique ou cyber-physique (SY_{t,cp}), incluant une unité de commande (CU) qui est responsable de tâches de commande dans l'engin (CPT), dans lequel
un outil mis en œuvre par ordinateur (CIT) selon l'une des revendications 7 à 12 est apte à être téléversé dans l'unité de commande (CU) pour la mise en œuvre du procédé selon l'une des revendications 1 à 6.

14. Agencement de configuration (CGA) pour la configuration (cfg) d'un dispositif (DV_{c}) devant être mis en service d'un ensemble de dispositifs (DV₁... DVₙ) pour une mise en service (CMS) avec un système technique ou cyber-physique (SY_{t,cp}), dans lequel
un engin (CPT) selon la revendication 13 qui est connecté au système (SY_{t,cp}), un référentiel de logiciels (SWR) pour le stockage de données de progiciel (SWPD) connecté à l'engin (CPT), un système de commande de développement (DCS) connecté à l'engin (CPT) et un jumeau numérique de dispositif de système (DSDT) pour le stockage de données de configuration de dispositif de l'ensemble de dispositifs (DV₁...DVₙ) connecté au système de commande de développement (DCS), lesquels forment une unité fonctionnelle de sorte que le procédé selon l'une des revendications 1 à 6 est mis en œuvre.
